# EUROPÄISCHE PATENTSCHRIFT

(11) **EP 3 635 837 B1**
(45) Veröffentlichungstag und Bekanntmachung des Hinweises auf die Patenterteilung: **29.07.2026**
(21) Anmeldenummer: 18729955.7
(22) Anmeldetag: 07.06.2018
(51) Int. Cl.: H02J 3/48, H02J 3/50, H02J 3/38, H02J 3/46, H02J 3/36

(54) **VERFAHREN ZUM BETREIBEN EINES WINDPARKS**
METHOD FOR OPERATING A WIND FARM
PROCÉDÉ DE FONCTIONNEMENT D'UN PARC ÉOLIEN

(30) Priorität: 07.06.2017 DE 102017112491
(43) Veröffentlichungstag der Anmeldung: 15.04.2020
(73) Patentinhaber: Wobben Properties GmbH, 26607 Aurich (DE)
(72) Erfinder: BROMBACH, Johannes, 13437 Berlin (DE); MACKENSEN, Ingo, 26607 Aurich (DE); BUSKER, Kai, 26629 Großefehn (DE)
(74) Vertreter: Eisenführ Speiser
(86) Internationale Anmeldenummer: PCT/EP2018/065031
(87) Internationale Veröffentlichungsnummer: WO 2018/224596

(56) Entgegenhaltungen:
- EP-A1- 3 890 136
- DE-A1- 102014 214 151
- US-A1- 2014 204 633
- KURRAT MICHAEL ET AL: "Eenia Jahresbericht 2016", JAHRESBERICHT 2016, INSTITUT FÜR HOCHSPANNUNGSTECHNIK UND ELEKTRISCHE ENERGIEANLAGEN, 31 December 2016 (2016-12-31), XP055790885, Retrieved from the Internet <URL:https://www.tu-braunschweig.de/fileadmin/Redaktionsgruppen/Institute_Fakultaet_5/Elenia/institut/Jahresbericht/Jahresbericht_2016.pdf> [retrieved on 20210329]
- TINE L. VANDOORN ET AL: "Voltage-Based Droop Control of Renewables to Avoid On Off Oscillations Caused by Overvoltages", IEEE TRANSACTIONS ON POWER DELIVERY IEEE SERVICE CENTER, NEW YORK, NY., US, vol. 28, no. 2, 1 April 2013 (2013-04-01), pages 845 - 854, XP011498064, ISSN: 0885-8977, DOI: 10.1109/TPWRD.2013.2241793
- WANG SHIKE ET AL: "Modeling and analysis of droop based hybrid control strategy for parallel inverters in islanded microgrids", 2017 IEEE APPLIED POWER ELECTRONICS CONFERENCE AND EXPOSITION (APEC), IEEE, 26 March 2017 (2017-03-26), pages 3462 - 3469, XP033098752, DOI: 10.1109/APEC.2017.7931194
- NAGARAJU POGAKU ET AL: "Modeling, Analysis and Testing of Autonomous Operation of an Inverter-Based Microgrid", IEEE TRANSACTIONS ON POWER ELECTRONICS, INSTITUTE OF ELECTRICAL AND ELECTRONICS ENGINEERS, USA, vol. 22, no. 2, 1 March 2007 (2007-03-01), pages 613 - 625, XP011172381, ISSN: 0885-8993, DOI: 10.1109/TPEL.2006.890003

## Beschreibung

Die vorliegende Erfindung betrifft ein Verfahren zum Betreiben eines Windparks. Die vorliegende Erfindung betrifft auch einen entsprechenden Windpark.

Windparks sind grundsätzlich bekannt und weisen mehrere Windenergieanlagen auf. Die Windenergieanlagen des Windparks speisen dann gemeinsam, insbesondere über einen gemeinsamen Netzanschlusspunkt, elektrische Leistung in ein elektrisches Versorgungsnetz ein.

Mit zunehmender Dominanz von dezentralen Einspeisungseinheiten wie Windenergieanlagen oder Windparks in dem elektrischen Versorgungsnetz, wird immer wichtiger, dass Windparks auch einen Beitrag zum Steuern des elektrischen Versorgungsnetzes leisten. Auch solche Verfahren sind bereits bekannt und beispielsweise speisen Windparks in Abhängigkeit einer Frequenz entsprechend mehr oder weniger Blindleistung ein. Auch das Reduzieren einer Leistungseinspeisung oder auch ein kurzfristiges Erhöhen eingespeister Wirkleistung kommt als Steuerung oder Stützung des elektrischen Versorgungsnetzes durch Windparks in Betracht.

Durch einen höheren Anteil dezentraler, insbesondere umrichtergesteuerter Einspeiser verändert sich aber auch das Verhalten des elektrischen Versorgungsnetzes in seiner Art. Bekannte Stützmaßnahmen, wie die frequenzabhängige Leistungsveränderung, können dann mitunter nicht mehr geeignet sein, weil das elektrische Versorgungsnetz durch die beschriebene Veränderung möglicherweise grundsätzlich anders reagiert.

Auf ein geändertes Netzverhalten könnte grundsätzlich mit einer Umschaltung zwischen unterschiedlichen Reglern reagiert werden. Dazu schlägt die Offenlegungsschrift DE 10 2013 207 264 A1 eine Reglerumschaltung vor. Fraglich ist aber, ob mit einer solchen Reglerumschaltung jegliche Netzveränderungen oder auch geänderte Netzanforderungen adressiert werden können.

Das Deutsche Patent- und Markenamt hat in der Prioritätsanmeldung zu vorliegender Anmeldung außerdem folgenden Stand der Technik recherchiert: DE 10 2006 050 077 A1, DE 10 2014 214 151 A1 sowie den Jahresbericht 2016 der Technischen Universität Braunschweig, Institut für Hochspannungstechnik und Elektrische Energieanlagen -elenia, Seiten 54-56.

Artikel S. Wang et al. "Modeling and analysis of droop based hybrid control strategy for parallel inverters in islanded microgrids", 2017 IEEE APPLIED POWER ELECTRONICS CONFERENCE AND EXPOSITION (APEC), IEEE, 26. Marz 2017 (2017-03-26), Seiten 3462-3469, beschreibt ein Verfahren zur Modellierung und Analyse einer auf Statik basierenden Hybridsteuerungsstrategie für Parallelwechselrichter in Insel-Mikronetzen.

Artikel TINE L. VANDOORN ET AL: "Voltage-Based Droop Control of Renewables to Avoid On Off Oscillations Caused by Overvoltages", IEEE TRANSACTIONS ON POWER DELIVERY IEEE SERVICE CENTER, NEW YORK, NY., US, Bd. 28, Nr. 2, 1. April 2013 (2013-04-01), Seiten 845-854, ISSN: 0885-8977, DOI: 10.1109/TPWRD.2013.2241793, beschreibt ein Verfahren um mehrere Erzeugereinheiten wie Windenergieanlagen entweder als spannungsprägende, oder als stromprägende Einheiten am Netzkoppelpunkt zu betreiben, wobei optional der Betrieb mit einer Statik diskutiert wird.

Der vorliegenden Erfindung liegt somit die Aufgabe zugrunde, zumindest eins der oben genannten Probleme zu adressieren. Insbesondere soll eine Lösung vorgeschlagen werden, mit der möglichst gut auch unterschiedlichen Netzanforderungen begegnet werden kann. Zumindest soll gegenüber bisher bekannten Verfahren eine alternative Lösung vorgeschlagen werden.

Erfindungsgemäß wird ein Verfahren gemäß Anspruch 1 vorgeschlagen. Ein solches Verfahren ist somit zum Betreiben einer Windenergieanlage oder eines Windparks mit mehreren Windenergieanlagen zum Austauschen elektrischer Leistung zwischen dem Windpark und einem elektrischen Versorgungsnetz vorgesehen. Insbesondere geht es darum, das Einspeisen des Windparks in das elektrische Versorgungsnetz zu steuern, es kommt aber auch in Betracht, dass die Windenergieanlage bzw. der Windpark Leistung aus dem elektrischen Versorgungsnetz entnimmt, besonders bei speziellen Netzstützvorgängen. Insoweit betrifft das Verfahren generell das Betreiben einer Windenergieanlage oder eines Windparks zum Austauschen elektrischer Leistung zwischen der Windenergieanlage bzw. dem Windpark und dem elektrischen Versorgungsnetz.

Das Verfahren geht davon aus, dass jede der Windenergieanlagen eine oder mehrere Einspeisevorrichtungen aufweist. Besonders kann je Windenergieanlage wenigstens ein Umrichter oder Wechselrichter vorgesehen sein. Vorzugsweise sind, um höhere Leistung zu realisieren, mehrere Umrichter oder Wechselrichter parallel geschaltet. In dem Fall hat dann eine Windenergieanlage mehrere Einspeisevorrichtungen. Sofern sich das Verfahren nur auf das Betreiben einer Windenergieanlage bezieht, hat diese mehrere Einspeisevorrichtungen, aber auch zum Betreiben eines Windparks sind bevorzugt mehrere Einspeisevorrichtungen in jeder Windenergieanlage vorgesehen. Eine Unterscheidung zwischen Umrichter und Wechselrichter ist hier nur von untergeordneter Bedeutung und jegliche Erklärungen zu Umrichtern sind auch als Erklärungen zu Wechselrichtern zu verstehen und umgekehrt, es sei denn, es wird etwas anderes erläutert oder etwas anderes ist offensichtlich. Jegliche nachfolgend beschriebenen Erläuterungen eines Windparks sind, sofern es keine Besonderheiten eines Windparks betrifft, auch sinngemäß für eine einzelne Windenergieanlage anzuwenden.

Weiterhin wird davon ausgegangen, dass die Windenergieanlage bzw. der Windpark über einen Netzanschlusspunkt mit dem elektrischen Versorgungsnetz verbunden ist und die Leistung über den Netzanschlusspunkt ausgetauscht wird. Die Windenergieanlagen des Windparks teilen sich also einen gemeinsamen Netzanschlusspunkt. Grundsätzlich ist das Verfahren aber auch geeignet, mehrere Windparks zu steuern, wobei dann jeder Windpark seinen eigenen Netzanschlusspunkt haben kann.

Es wird vorgeschlagen, dass eine oder mehrere der Einspeisevorrichtungen als spannungsprägende Einheiten arbeiten. Sie tauschen somit spannungsprägend Leistung mit dem elektrischen Versorgungsnetz aus, insbesondere speisen sie spannungsprägend in das elektrische Versorgungsnetz ein. Außerdem wird vorgeschlagen, dass eine oder mehrere der Einspeisevorrichtungen als stromprägende Einheiten arbeiten. Diese tauschen somit stromprägend Leistung mit dem elektrischen Versorgungsnetz aus, insbesondere speisen sie stromprägend in das elektrische Versorgungsnetz ein.

Es wird also vorgeschlagen, dass der Windpark einen oder mehrere spannungsprägende Einheiten und eine oder mehrere stromprägende Einheiten zum Einspeisen aufweist. Solche Einspeiseeinheiten, nämlich spannungsprägende einerseits und stromprägende andererseits, können grundsätzlich verschieden arbeiten. Als spannungsprägende Einheit zu arbeiten bedeutet, besonders eine vorgegebene Spannung zu prägen. Vereinfacht ausgedrückt, wird dort eine Spannung zurückgeführt und bildet insoweit die Regelgröße und die spannungsprägende Einheit versucht entsprechend, diese Spannung auszuregeln, also einzustellen.

Dem entgegen bedeutet, als stromprägende Einheit zu arbeiten, einen Strom zu regeln. Es wird hier also besonders ein Strom ausgegeben und gemessen und dieser Messwert als Istwert einem Sollwert gegenüber gestellt und abhängig von der Differenz zwischen Soll- und Istwert entsprechend geregelt.

Einige Einheiten arbeiten somit spannungsprägend und andere stromprägend. Vorzugsweise wird vorgeschlagen, dass dieselben Einheiten hinsichtlich ihrer Hardware gleich sind, die aber wahlweise, besonders durch eine entsprechende Ansteuerung stromprägend oder spannungsprägend arbeiten können. Es kommt aber auch in Betracht, dass von vornherein spannungsprägende und stromprägende Einheiten vorgesehen sind, die sich also in ihrer Hardware oder ihrem Aufbau unterscheiden, aber je nach Bedarf angesteuert bzw. eingesetzt werden können. In diesem Fall wird hier vorgesehen, dass sowohl spannungsprägende Einheiten als auch stromprägende Einheiten angesteuert werden, um den Austausch der Leistung mit dem elektrischen Versorgungsnetz zu steuern.

Mit einem solchen kombinierten Betrieb, bei dem einige Einheiten spannungsprägend und andere stromprägend arbeiten, können auch grundsätzlich geänderte Anforderungen an das elektrische Versorgungsnetz berücksichtigt werden. Besonders ein elektrisches Versorgungsnetz, das bspw. wegen seiner Topologie selbst schlecht in der Lage ist, seine eigene Spannung zu halten, kann mittels spannungsprägender Einspeisung bzw. spannungsprägendem Leistungsaustausch gestützt werden.

Durch den stromprägenden Betrieb einiger Einheiten kann besonders stabil ein entsprechender Einspeisestrom und damit Leistung in das elektrische Versorgungsnetz eingespeist werden. Das kann aber auch beinhalten, dass Einspeisestrom bzw. Leistung aus dem Netz entnommen wird, besonders für einen kurzen Zeitraum.

Grundsätzlich können aber auch durch spannungsprägenden Betrieb und stromprägenden Betrieb spezielle Regelungsaufgaben verteilt werden, für die ein spannungsprägender Betrieb und ein stromprägender Betrieb unterschiedlich gut geeignet sind. Dazu werden auch unten noch Beispiele gegeben werden.

Es wird besonders vorgesehen, dass die spannungsprägenden Einheiten und die stromprägenden Einheiten auch in einem ungestörten Betrieb des elektrischen Versorgungsnetzes spannungsprägend bzw. stromprägend arbeiten. Der ungestörte Betrieb kann auch als Normalbetrieb bezeichnet werden. Der ungestörte Betrieb ist somit ein Betrieb ohne Störungen, wobei als Störungen signifikante Störungen bezeichnet werden, wie eine Netzunterbrechung, ein Kurzschluss im elektrischen Versorgungsnetz und insbesondere ein Netzwiederaufbau oder ein Schwarzstart des elektrischen Versorgungsnetzes bzw. eines Netzabschnitts. Die Verwendung von spannungsprägenden und stromprägenden Einheiten in einem Windpark wird somit generell vorgeschlagen und soll nicht auf einen spezielle Modus beschränkt sein, besonders soll es nicht auf einen speziellen Schwarzstartmodus beschränkt sein, sondern dies wird ausdrücklich für einen Normalbetriebsmodus vorgesehen. Ein ungestörter Betrieb bzw. Normalbetrieb ist insoweit ein Betriebsmodus, in dem die Windenergieanlage oder der Windpark in Betrieb sind, um Leistung aus dem Wind zu erzeugen und in der Höhe, in der die Leistung aus dem Wind erzeugt werden kann, diese in das elektrische Versorgungsnetz einzuspeisen. Ein solcher Normalbetrieb kann unterbrochen werden durch spezielle Stützbetriebe, für die die Kombination der spannungsprägenden und stromprägenden Einheiten auch sinnvoll ist.

Die spannungs- und stromprägenden Einheiten werden aber nicht erst für spezielle Betriebsmodi eingeschaltet, sondern sind bereits im Normalbetrieb spannungsprägend- bzw. stromprägend tätig.

Es wird vorzugsweise vorgeschlagen, dass zum Betreiben der Windenergieanlage oder des Windparks gleichzeitig spannungsprägende Einheiten spannungsprägend Leistung mit dem elektrischen Versorgungsnetz austauschen und stromprägende Einheiten stromprägend Leistung mit dem elektrischen Versorgungsnetz austauschen. Spannungsprägend und stromprägend Leistung mit dem elektrischen Versorgungsnetz auszutauschen soll somit gleichzeitig erfolgen. Es wird also nicht zwischen den beiden Arten ausgewählt, sondern sie ergänzen sich. Je nach Anwendungsfall, insbesondere je nach Situation in dem elektrischen Versorgungsnetz kommt auch in Betracht, dass das Verhältnis spannungsprägend zu arbeiten und stromprägend zu arbeiten variiert werden kann.

Jedenfalls steuern die stromprägenden Einheiten im stromprägenden Betrieb jeweils einen in das elektrische Versorgungsnetz einzuspeisenden Einspeisestrom. Hier wird auch dann von einem Einspeisestrom gesprochen, wenn elektrische Leistung aus dem elektrischen Versorgungsnetz entnommen wird. Für diesen Fall kann der Einspeisestrom negativ sein bzw. sein Phasenwinkel so gewählt sein, dass Leistung aus dem elektrischen Versorgungsnetz entnommen wird.

Im spannungsprägenden Betrieb steuern die spannungsprägenden Einheiten eine Einspeisespannung zur Einspeisung in das elektrische Versorgungsnetz. Hier ist also die Einspeisespannung die entscheidende Zielgröße oder Regelgröße. Im stromprägenden Betrieb wird also auf den Einspeisestrom geregelt und im spannungsprägenden Betrieb auf die Einspeisespannung. Stromprägende Einheiten sind solche, die stromprägend arbeiten und spannungsprägende Einheiten sind solche, die spannungsprägend arbeiten. Diese Eigenschaft muss der jeweiligen Einheit aber nicht unbedingt fest zugeordnet sein, sondern kann ggf. auch durch entsprechende Veränderung der Steuerung erreicht werden.

Vorzugsweise arbeiten die stromprägenden Einheiten so, dass sie sich im stromprägenden Betrieb an die Einspeisespannung, die besonders im Windpark am Netzanschlusspunkt anliegt, anpassen. Sie steuern also den Einspeisestrom und die Einspeisespannung bildet dafür eine Randbedingung, die berücksichtigt wird. Es wird aber nicht versucht, gezielt einen Spannungswert auszuregeln, jedenfalls nicht in dem Sinne, dass ein Spannungssollwert vorgegeben wird. Das lässt aber die Möglichkeit unbenommen, dass auf eine Spannung oder Spannungsabweichung durch eine übergeordnete Regelung reagiert wird, wie beispielsweise in Abhängigkeit der Spannung einen Phasenwinkel des Stroms einzustellen. Bei diesem Beispiel hat zwar das Einstellen des Phasenwinkels auch den Zweck, auf die Spannungshöhe einzuwirken, die von der stromprägenden Einheit hierbei durchgeführte Regelung bzw. Einspeiseart ist aber, einen solchen Sollstrom auszuregeln.

Im spannungsprägenden Betrieb speisen die spannungsprägenden Einheiten jeweils einen Strom ein, der zum Steuern der Einspeisespannung erforderlich ist bzw. der sich durch das Steuern der Einspeisespannung ergibt. Für den spannungsprägenden Betrieb ist somit für die entsprechenden spannungsprägenden Einheiten kein Sollstrom vorgesehen, sondern eine Sollspannung. Es wird versucht, diese Spannung regelungstechnisch zu erreichen und das wird einen Einspeisestrom zur Folge haben. Fällt also beispielsweise die Einspeisespannung unter einen entsprechenden Sollwert hierfür ab, oder weicht anderweitig von einem Sollwert ab, versucht die jeweilige spannungsprägende Einheit in dem spannungsprägenden Betrieb diesem Abfall entgegen zu wirken und das kann zu einem entsprechend erhöhten Einspeisestrom führen. Auch hier kann ein solcher Einspeisestrom vorliegen, dass elektrische Leistung aus dem Netz entnommen wird.

Gemäß einer Ausführungsform arbeitet das Verfahren so, dass im Falle einer Überfrequenz im elektrischen Versorgungsnetz die vom Windpark in das elektrische Versorgungsnetz eingespeiste Leistung verringert wird. Dazu kann das Verfahren so arbeiten, dass die spannungsprägenden Einheiten zunächst in einem Anfangszeitraum ihre Einspeiseleistung verringern, um dadurch das Verringern der eingespeisten Leistung zu bewirken. Hinsichtlich der stromprägenden Einheiten kann das Verfahren so arbeiten, dass diese auf die spannungsprägenden Einheiten folgend ihre Einspeiseleistung verringern, um in einem den Anfangszeitraum folgenden Anschlusszeitraum das Verringern der eingespeisten Leistung zu bewirken, wenn die Verringerung der am Windpark eingespeisten Leistung einen stationären Wert angenommen hat. Dann werden die spannungsprägenden Einheiten dazu betrieben, eine Spannungshaltung durchzuführen und insbesondere in dem Anschlusszeitraum das Verringern der vom Windpark eingespeisten Leistung den stromprägenden Einheiten zu überlassen. Dadurch übernehmen die spannungsprägenden Einheiten durch ihren spannungsprägenden Betrieb die akute Erststeuerung bzw. Erstregelung.

Eine Frequenzänderung im elektrischen Versorgungsnetz bedeutet zunächst, dass sich die Frequenz der Spannung im elektrischen Versorgungsnetz ändert. Es wird also zuerst eine Auswirkung an der Spannung erkannt. Diese Auswirkung an der Spannung durch diese Frequenzänderung macht sich somit unmittelbar bei den spannungsprägenden Einheiten bemerkbar, denn diese erfassen die Spannung und versuchen ihren Sollwert zu halten. Dabei geht es nicht oder nicht nur um Spannungseffektivwerte, sondern besonders auch um Momentanwerte. Ändert sich die Frequenz der Istspannung gegenüber der Frequenz der Sollspannung, verändert sich auch der Phasenwinkel zwischen Ist- und Sollspannung. Das führt unmittelbar zu einer Spannungsabweichung in jedem Momentanwert. Darauf kann die spannungsprägende Einheit, die im spannungsprägenden Betrieb arbeitet, sofort reagieren, bevor eine übergeordnete Regelung abhängig einer Frequenzänderung einen geänderten Sollwert bestimmt.

Etwas vereinfacht ausgedrückt reagiert eine spannungsprägende Einheit auf eine Frequenzänderung ähnlich wie ein direkt angeschlossener Synchrongenerator. Jedenfalls verhält sich eine spannungsprägende Einheit ähnlicher zu einem Synchrongenerator, als eine stromprägende Einheit.

Die stromprägenden Einheiten können etwas später die Leistungsverringerung übernehmen, insbesondere dadurch, dass sie einen verringerten Stromsollwert bekommen. Sobald die stromprägenden Einheiten diese Leistungsverringerung übernommen haben, kann sich dies auch auf die Frequenz und Spannung auswirken und der regelnde Anteil der spannungsprägenden Einheiten kann sich dann wieder reduzieren. Im Idealfall kann sich dadurch die Leistungsverringerung durch die spannungsprägenden Einheiten auf null reduzieren. Häufig kann es aber vorkommen, dass ein solcher Betrieb einer Überfrequenz nur sehr kurz auftritt und das Verhalten der spannungsprägenden Einheiten insoweit relevant bleibt. Mit anderen Worten nehmen hier die spannungsprägenden Einheiten im Wesentlichen die dynamische Regelung wahr, wohingegen die stromprägenden Einheiten eher den stationären Fall übernehmen.

Gemäß einer Ausführungsform wird vorgeschlagen, dass im Falle der Überfrequenz im elektrischen Versorgungsnetz Leistung vom Windpark aus dem elektrischen Versorgungsnetz aufgenommen und insbesondere verbraucht wird. Diese Ausführungsform geht somit noch einen Schritt weiter als lediglich im Falle einer Überfrequenz Leistung zu reduzieren, indem darüber hinaus vorgeschlagen wird, Leistung sogar aus dem Versorgungsnetz aufzunehmen. Die Leistung kann dann beispielsweise in einem Choppersystem verbraucht werden.

Dabei wird vorgeschlagen, dass die spannungsprägenden Einheiten dazu betrieben werden, die Leistung aus dem elektrischen Versorgungsnetz aufzunehmen, zumindest in dem Anfangszeitraum. Somit wird selbst für den Fall, dass Leistung aus dem Netz entnommen wird vorgeschlagen, dass hier zumindest anfangs die spannungsprägenden Einheiten diese Aufgabe im Wesentlichen übernehmen. Grundsätzlich ist auch hier vorgesehen, dass die spannungsprägenden Einheiten besonders am Anfang und damit im Übergang zu einer solchen Überfrequenzsituation die Regelung übernehmen. Da aber ein solcher Fall, bei dem elektrische Leistung aus dem Netz sogar entnommen werden sollte, häufig nur für einen kurzen Übergangszeitraum vorliegt, wird dann auch insgesamt diese Regelung im Wesentlichen durch die spannungsprägenden Einheiten übernommen werden.

Es wurde somit erkannt, dass selbst für den Fall der Leistungsaufnahme die spannungsprägenden Einheiten besonders gut für diese Aufgabe geeignet sind.

Vorzugsweise ist vorgesehen, dass der Windpark mit einer Einspeisespannung in das elektrische Versorgungsnetz einspeist. Dazu wird auf Phasensprünge im elektrischen Versorgungsnetz geprüft. Ein solcher Phasensprung der Netzspannung führt zu einer Phasenverschiebung in der Netzspannung, nämlich in zeitlicher Hinsicht. Die absolute Phasenlage der Netzspannung verändert sich also sprunghaft, so dass beispielsweise ein Nulldurchgang der Netzspannung gegenüber dem bisherigen Rhythmus um eine Millisekunde verschoben ist.

Ein solches Phänomen kann besonders auf das Verhalten eines oder mehrerer Synchrongeneratoren zurückgeführt werden, die unmittelbar mit dem elektrischen Versorgungsnetz gekoppelt sind. Solche Synchrongeneratoren weisen einen Polradwinkel auf, der vom Ständerstrom abhängt und die Lage der Polradspannung bestimmt. Durch eine Änderung des Ständerstroms kann sich somit eine Änderung des Polrads und damit der Phasenlage der Polradspannung ändern.

Bei dieser Ausführungsform wird nun vorgeschlagen, dass auf entsprechende Phasensprünge geprüft wird. Dabei arbeitet das Verfahren so, dass im Falle eines Phasensprungs die spannungsprägenden Einheiten in einem ersten Schritt zunächst Wirk- und/oder Blindleistung einspeisen, um Frequenz und/oder Phasenlage der Einspeisespannung zu halten. Die spannungsprägenden Einheiten reagieren also sofort auf einen solchen Phasensprung und versuchen sich diesem im Grund entgegen zu stemmen. Dadurch kann zunächst dem Phasensprung etwas entgegenwirkt werden. Dadurch kann auch möglicherweise ein zu großer Phasensprung verhindert werden und damit ggf. ein Außer-trittgeraten eines entsprechenden direkt mit dem elektrischen Versorgungsnetz gekoppelten Synchrongenerators verhindert werden. Besonders kann dieses Verhalten der spannungsprägenden Einheiten den Synchrongenerator zumindest etwas stabilisieren, der den Phasensprung verursacht hat, wobei auch mehrere Synchrongeneratoren den Phasensprung verursacht haben können. Für dieses Verhalten ist eine ausdrückliche Prüfung auf einen Phasensprung noch entbehrlich, weil eine Berücksichtigung bereits durch das spannungsprägende Verhalten erreicht wird. Für weitere Schritte und damit das insgesamt vorgeschlagene Konzept ist eine Prüfung auf einen Phasensprung aber sinnvoll.

Wird dann ein Phasensprung erkannt, kann in einem zweiten Schritt eine Referenzfrequenz und außerdem oder alternativ eine Referenzspannung der geänderten Netzspannung nachgeführt werden. Vorzugsweise wird nur eine Referenzspannung vorgegeben, die dabei die entsprechende Referenzfrequenz beinhaltet, nämlich in ihrer konkreten Signalform. Über diese Vorgabe dieser Referenzfrequenz bzw. Referenzspannung kann nun gezielt ein entsprechender Referenzwert vorgegeben werden, der vorteilhaft für die Stabilität des elektrischen Versorgungsnetzes ist. Hier kommt insbesondere in Betracht, dass die Referenzspannung so vorgegeben wird, dass der Übergang von dem bisherigen Spannungsverlauf vor Auftreten des Phasensprungs zu dem Spannungsverlauf nach Auftreten des Phasensprungs allmählich erfolgt, so dass eine Überreaktion im elektrischen Versorgungsnetz verhindert wird. Dabei kommt auch in Betracht, dass das Verhalten des Netzes selbst auf diesen Phasensprung beobachtet und für die Vorgabe der Referenzspannung verwendet wird. Beispielsweise kann das elektrische Versorgungsnetz von sich aus, also durch andere Einspeiser oder Netzteilnehmer als der Windpark, auf den Phasensprung reagieren und beispielsweise die Phase zurück ändern oder anderweitig ändern oder eine Frequenz ändern. Eine solche Auswirkung kann beobachtet, insbesondere gemessen, werden und vorzugsweise erfolgt bei dem Windpark das Vorgeben der Referenzfrequenz bzw. Referenzspannung so, dass besonders einer Resonanz im elektrischen Versorgungsnetz, bedingt durch andere Gegenmaßnahmen, begegnet wird, eine solche Resonanz also verhindert wird.

Schließlich wird dann vorgesehen, dass die spannungsprägenden Einheiten die Einspeisespannung entsprechend der Referenzfrequenz bzw. Referenzspannung nachführen. Die Referenzfrequenz bzw. Referenzspannung bilden somit Sollwerte für die Regelung der spannungsprägenden Einheiten. Insbesondere kann auch eine Referenzfrequenz bzw. Referenzspannung so vorgegeben werden, dass dies für die Umsetzung durch die spannungsprägenden Einheiten gut durchführbar ist. Durch eine insoweit gezielte Vorgabe der Referenzfrequenz bzw. Referenzspannung kann also verhindert werden, dass zur Umsetzung resultierende Blind- und/oder Wirkströme nicht zu groß werden.

Gemäß einer Ausführungsform wird vorgeschlagen, dass der Windpark einen spannungsprägenden Betrieb mit Leistungseinspeisung durch eine kombinierte Steuerung der spannungsprägenden Einheiten und der stromprägenden Einheiten realisiert. Dazu wird vorgeschlagen, dass die spannungsprägenden Einheiten im Wesentlichen die Spannungsprägung und außerdem oder alternativ dynamische Ausgleichsvorgänge vornehmen, und dass die stromprägenden Einheiten im Wesentlichen eine stationäre Leistungseinspeisung vornehmen.

Die spannungsprägenden Einheiten reagieren besonders schnell auf Spannungsänderungen oder Spannungsabweichungen und sind damit besonders schnelle Regelungswerkzeuge. Dies wird in diesem Betrieb der kombinierten Steuerung ausgenutzt. Damit können die spannungsprägenden Einheiten die Spannungsprägung vorsehen, aber auch schnelle Regelungsvorgänge einleiten.

Die stromprägenden Einheiten, die im Wesentlichen stromabhängig regeln, reagieren im Vergleich zu den spannungsprägenden Einheiten eher mittelbar auf Änderungen im elektrischen Versorgungsnetz, insbesondere mittelbar auf Spannungsänderungen. Die stromprägenden Einheiten reagieren nämlich im Wesentlichen auf Stromänderungen, die eine Folge von Spannungsänderungen sein können, und sie reagieren auf geänderte Sollwerte, die beispielsweise für sie von einer übergeordneten Steuereinrichtung vorgegeben werden können. Damit kann aber gewährleistet werden, dass die stromprägenden Einheiten vergleichsweise stabil und stetig Leistung einspeisen können.

Gemäß einer Ausführungsform ist jede Einspeisevorrichtung durch einen Leistungskennwert gekennzeichnet, insbesondere eine Nennleistung. Dazu wird vorgeschlagen, dass in Bezug auf die jeweiligen Leistungskennwerte der Windpark einen größeren Anteil an stromprägenden Einheiten als an spannungsprägenden Einheiten aufweist. Im Windpark dominieren also die stromprägenden Einheiten. Damit kann eine gute und stabile Leistungseinspeisung erreicht werden, wohingegen gleichzeitig eine hohe Regeldynamik durch die spannungsprägenden Einheiten gewährleistet werden kann.

Vorzugsweise bilden die spannungsprägenden Einheiten einen Anteil von wenigstens 2% und maximal 25%, vorzugsweise von maximal 15% und insbesondere von maximal 10%.

Diese Anteile beziehen sich auf einen 100%-Anteil, der die Summe der Leistungskennwerte aller Einspeiseeinrichtungen bezeichnet. Es wird also vorgeschlagen, dass weniger als ein Drittel, bezogen auf die Leistungskennwerte, spannungsprägende Einheiten im Windpark sind. Bereits ein Anteil von 15% oder 20% kann das genannte Konzept gewährleisten, nämlich durch möglichst viele stromprägende Einheiten eine gute und stabile Leistungseinspeisung zu erreichen, gleichwohl noch einen ausreichenden Anteil spannungsprägender Einheiten für schnelle Regelungszwecke zu beinhalten.

Vorzugsweise weisen die spannungsprägenden Einheiten wenigstens eine erste Statik auf und die stromprägenden Einheiten wenigstens eine zweite Statik. Jede Statik beschreibt jeweils einen Zusammenhang, besonders einen linearen Zusammenhang, zwischen einer elektrischen Spannung des Windparks und einer einzuspeisenden oder eingespeisten Blindleistung. Jede Statik kann auch alternativ einen Zusammenhang beschreiben zwischen einer Frequenz des Windparks und einer einzuspeisenden oder eingespeisten Wirkleistung. Dazu wird vorgeschlagen, dass die erste Statik eine kleinere Steigung als die zweite Statik aufweist. Vereinfachend ausgedrückt ist die Statik der stromprägenden Einheiten steiler als die Statik der spannungsprägenden Einheiten.

Besonders beschreibt die erste Statik, also die Statik der spannungsprägenden Einheiten, einen Zusammenhang zwischen der elektrischen Spannung des Windparks jeweils am Ausgang der spannungsprägenden Einheit und der durch diese spannungsprägende Einheit eingespeisten Blindleistung. Die spannungsprägende Einheit stellt dann die elektrische Spannung besonders an ihrem Ausgang, was somit eine Spannung des Windparks ist, in Abhängigkeit der Blindleistung, die sie selbst eingespeist hat, ein. Dabei wird besonders ein Sollwert für diese Spannung eingestellt, nämlich entsprechend der ersten Statik in Abhängigkeit der eingespeisten Blindleistung.

Die zweite Statik, also die Statik der stromprägenden Einheiten, betrifft dabei eine Abhängigkeit der einzuspeisenden Blindleistung von der elektrischen Spannung des Windparks. Auch hier kommt die elektrische Spannung am Ausgang der betreffenden stromprägenden Einheit in Betracht, die hier nun aber die Eingangsgröße bildet. Abhängig von dieser Spannung und entsprechend der zweiten Statik wird dann die einzuspeisende Blindleistung bestimmt und besonders als Blindleistungssollwert vorgegeben. Jede stromprägende Einheit speist dann möglichst eine Blindleistung gemäß diesem Blindleistungssollwert ein.

Für den Fall, dass die Statik einen Zusammenhang zwischen Frequenz und Wirkleistung angibt, wird für die spannungsprägenden Einheiten ein Frequenzsollwert in Abhängigkeit der eingespeisten Wirkleistung entsprechend der ersten Statik vorgegeben. Für die stromprägenden Einheiten wird gemäß der zweiten Statik ein Sollwert für die Wirkleistung in Abhängigkeit der Frequenz vorgegeben.

Durch diese unterschiedlichen Steilheiten der Statiken wird erreicht, dass die spannungsprägenden Einheiten zunächst schnell und mit großen Stellgrößen regeln, wohingegen die stromprägenden Einheiten insoweit eine schwächere Verstärkung aufweisen und dadurch das dynamische Regeln im Wesentlichen den spannungsprägenden Einheiten überlassen.

Gemäß einer Ausführungsform wird vorgeschlagen, dass die spannungsprägenden Einheiten jeweils wenigstens eine erste Blindleistungsstatik aufweisen, die jeweils einen Zusammenhang zwischen einer durch die spannungsprägende Einheit im Windpark bereitzustellende elektrische Spannung und einer durch die spannungsprägende Einheit eingespeiste Blindleistung beschreibt. Die erste Blindleistungsstatik gibt also an, in welcher Höhe die spannungsprägende Einheit jeweils eine elektrische Spannung im Windpark in Abhängigkeit ihrer eingespeisten Blindleistung bereitstellen soll.

Es wird zudem vorgeschlagen, dass die stromprägenden Einheiten jeweils wenigstens eine zweite Blindleistungsstatik aufweisen, die jeweils einen Zusammenhang zwischen einer im Windpark erfassten elektrischen Spannung und einer durch die stromprägende Einheit einzuspeisenden Blindleistung beschreibt. Die zweite Blindleistungsstatik gibt also an, wie viel Blindleistung die stromprägende Einheit in Abhängigkeit der erfassten elektrischen Spannung einspeisen soll.

Dazu wird nun vorgeschlagen, dass die erste Blindleistungsstatik, also die der spannungsprägenden Einheiten, eine kleinere Steigung als die zweite Blindleistungsstatik, also die der stromprägenden Einheiten aufweist. Die erste Statik gibt dabei aber an, wie viel Spannung in Abhängigkeit der eingespeisten Blindleistung eingestellt werden soll. Ein bereits geringer Wert eingespeister Blindleistung kann somit zu einem hohen einzustellenden Spannungswert führen. Deshalb ist hierfür die spannungsprägende Einheit bzw. ihre Regelung dominanter als die stromprägenden Einheiten.

Außerdem oder alternativ wird gemäß einer Ausführungsform vorgeschlagen, dass die spannungsprägenden Einheiten jeweils wenigstens eine erste Wirkleistungsstatik aufweisen. Die Wirkleistungsstatik gibt jeweils einen Zusammenhang zwischen einer im Windpark durch die spannungsprägende Einheit bereitzustellenden Frequenz und einer durch die spannungsprägende Einheit eingespeisten Wirkleistung. Die erste Wirkleistungsstatik gibt also an, wie hoch die Frequenz in Abhängigkeit der eingespeisten Wirkleistung gewählt werden soll.

Dazu weisen die stromprägenden Einheiten jeweils wenigstens eine zweite Wirkleistungsstatik auf, die jeweils einen Zusammenhang zwischen einer im Windpark erfassten Frequenz und einer durch die stromprägende Einheit einzuspeisenden Wirkleistung beschreibt. Die zweite Wirkleistungsstatik gibt also an, in welcher Höhe die stromprägende Einheit Wirkleistungen in Abhängigkeit der erfassten Frequenz einspeisen soll.

Dazu wird nun vorgeschlagen, dass die erste Wirkleistungsstatik eine kleinere Steigung als die zweite Wirkleistungsstatik aufweist. Auch hier wird also die Frequenz bei den spannungsprägenden Einheiten in Abhängigkeit der Wirkleistung eingestellt und durch die kleine Steigung der ersten Wirkleistungsstatik ergeben sich entsprechend starke Frequenzabweichungen bei geringen Wirkleistungsabweichungen. Somit ist auch hier die spannungsprägende Einheit jeweils ein schneller, dynamischer Regler. Die spannungsprägenden Einheiten sind insoweit auch hier für die besonders dynamischen Regelvorgänge vorgesehen.

Vorzugsweise wird auch vorgeschlagen, dass die spannungsprägenden Einheiten durch die erste Blindleistungsstatik so gesteuert werden, dass sie eine durch die spannungsprägende Einheit im Erzeugungsnetz bereitzustellende elektrische Spannung in Abhängigkeit einer durch die spannungsprägende Einheit eingespeisten Blindleistung so regelt, dass die eingespeiste Blindleistung auf einen Wert nahe null geregelt wird. Zumindest soll eine möglichst geringe stationäre Regelabweichung erreicht werden. Vorzugsweise sind die spannungsprägenden Einheiten zwar schnell regelnde Einheiten, sollen dafür aber im stationären Fall möglichst eine Regelung auf einen Wert nahe null erreichen, jedenfalls für die Blindleistung. Eine kleine Regelabweichung, z.B. im Bereich von 5% in Bezug auf die jeweilige Nennleistung kann sinnvoll sein und einen Spielraum für eine Regelung durch die stromprägenden Einheiten schaffen.

Erfindungsgemäß wird auch ein Windpark vorgeschlagen. Ein solcher ist zum Austauschen elektrischer Leistung mit einem elektrischen Versorgungsnetz über einen Netzanschlusspunkt vorgesehen und umfasst mehrere Windenergieanlagen. Jede der Windenergieanlagen weist eine oder mehrere Einspeisevorrichtungen auf. Eine Einspeisevorrichtung kann ein Umrichter oder Wechselrichter oder eine Anordnung von Umrichtern oder Wechselrichtern sein.

Eine oder mehrere der Einspeisevorrichtungen arbeiten als spannungsprägende Einheiten und tauschen spannungsprägende Leistung mit dem elektrischen Versorgungsnetz aus. Eine oder mehrere der Einspeisevorrichtungen arbeiten als stromprägende Einheiten und tauschen stromprägende Leistung mit dem elektrischen Versorgungsnetz aus. Der Windpark weist also spannungsprägende und stromprägende Einheiten auf und das ermöglicht ihm die Vorteile zu erreichen, die vorstehend bereits im Zusammenhang mit dem Verfahren zum Betreiben eines Windparks beschrieben wurden.

Vorzugsweise ist jede Einspeisevorrichtung durch einen Leistungskennwert gekennzeichnet, was besonders die Nennleistung der Einspeisevorrichtung sein kann, und es ist vorgesehen, dass in Bezug auf die jeweiligen Leistungskennwerte der Windpark einen größeren Anteil an stromprägenden Einheiten als an spannungsprägenden Einheiten aufweist. Vorzugsweise weist der Windpark spannungsprägende Einheiten von wenigstens 2% und maximal 25%, vorzugsweise maximal 15% und insbesondere maximal 10% auf. Die Werte beziehen sich dabei auf einen 100%-Anteil, der die Summe der Leistungskennwerte aller Einspeisevorrichtungen des Windparks bezeichnet. Es wird also vorgeschlagen, dass die stromprägenden Einheiten dominieren.

Gemäß einer weiteren Ausführungsform wird vorgeschlagen, dass jede Windenergieanlage oder jede Einspeisevorrichtung wenigstens eine Steuervorrichtung aufweist und in der Steuervorrichtung jeweils wenigstens eine Statik hinterlegt ist. Dazu wird vorgeschlagen, dass die spannungsprägenden Einheiten wenigstens eine erste Statik aufweisen und die stromprägenden Einheiten wenigstens eine zweite Statik aufweisen. Jede Statik beschreibt dabei jeweils einen Zusammenhang, insbesondere einen linearen Zusammenhang zwischen einer elektrischen Spannung des Windparks und einer einzuspeisenden oder eingespeisten Blindleistung. Eine andere Statik beschreibt jeweils einen Zusammenhang, besonders linearen Zusammenhang, zwischen einer Frequenz des Windparks und einer einzuspeisenden oder eingespeisten Wirkleistung. Dazu wird insgesamt vorgeschlagen, dass die erste Statik eine kleinere Steigung als die zweite Statik aufweist. Dadurch können die Regeldominanzen zwischen spannungsprägenden Einheiten und stromprägenden Einheiten eingeteilt werden. Insbesondere führt eine erste Statik mit kleinerer Steigung als die zweite Statik dazu, dass die spannungsprägenden Einheiten bei dynamischen Regelvorgängen dominieren.

Vorzugsweise weist die zweite Statik wenigstens eine doppelte Steigung gegenüber der ersten Statik auf, insbesondere wenigstens eine dreifache und bevorzugt wenigstens eine vierfache Steigung gegenüber der ersten Statik. Damit, dass die zweite Statik wenigstens doppelt so steil, vorzugsweise wenigstens dreimal so steil und insbesondere wenigstens viermal so steil ist, kann eine spannungsprägende Einheit signifikant gegenüber einer stromprägenden Einheit hinsichtlich ihrer Regelungseigenschaften dominieren.

Gemäß einer weiteren Ausführungsform wird vorgeschlagen, dass jede Windenergieanlage oder jede Einspeisevorrichtung wenigstens eine Steuervorrichtung aufweist und in der Steuervorrichtung jeweils wenigstens eine Statik hinterlegt ist, wobei die spannungsprägenden Einheiten jeweils eine erste Statik aufweisen und die stromprägenden Einheiten wenigstens eine zweite Statik aufweisen, wobei jede Statik jeweils einen Zusammenhang, besonders linearen Zusammenhang beschreibt, zwischen einer elektrischen Spannung des Windparks und einer einzuspeisenden oder eingespeisten Blindleistung, oder dass jede Statik einen Zusammenhang beschreibt zwischen einer Frequenz des Windparks und einer einzuspeisenden oder eingespeisten Wirkleistung, und wobei für beide Arten der Statik die erste Statik eine kleinere Steigung als die zweite Statik aufweist. Damit können die spannungsprägenden Einheiten eine schnellere dynamische Regelung bereitstellen.

Vorzugsweise ist in wenigstens einer der Windenergieanlagen, insbesondere in allen Windenergieanlagen des Windparks, jeweils wenigstens eine spannungsprägende und eine stromprägende Einheit vorgesehen. Dadurch kann jede Windenergieanlage für sich die Vorzüge der Kombination stromprägender und spannungsprägender Einheiten ausfüllen. Es kommt hinzu, dass durch die stromprägenden Einheiten besonders Leistung stabil und stetig eingespeist werden kann und damit durch das Vorsehen stromprägender Einheiten in jeder Windenergieanlage auch erreicht werden kann, dass jede Windenergieanlage dadurch gut die von ihr erzeugte Leistung einspeisen kann. Gleichzeitig ist aber auch jede Windenergieanlage dazu vorbereitet, eine dynamische Regelung durch wenigstens eine spannungsprägende Einheit zu erreichen.

Außerdem kann auch ein Windpark auf einfache Art und Weise dadurch geplant werden, dass grundsätzlich jede Windenergieanlage einen vorteilhaften Anteil von stromprägenden und spannungsprägenden Einheiten aufweist. Werden diese Anteile gleich für jede Windenergieanlage gewählt, so entspricht die Verteilung in jeder Windenergieanlage gleichzeitig der Verteilung im Windpark. Das hat zudem den Vorteil, dass dann, wenn eine Windenergieanlage ausfällt, die Verteilung von strom- und spannungsprägenden Einheiten im Windpark unverändert bleibt. Auch eine Ergänzung weiterer Windenergieanlagen zu dem Windpark ändert dann die Aufteilung zwischen spannungs- und stromprägenden Einheiten nicht, wenn auch eine solche ergänzte Windenergieanlage strom- und spannungsprägende Einheiten aufweist, insbesondere in dem Verhältnis, wie in dem Windpark vorgesehen ist.

Es kommt aber auch in Betracht, dass nicht jede Windenergieanlage strom- und spannungsprägende Einheiten aufweist, sondern nur einige und andere Windenergieanlagen nur stromprägende Einheiten aufweisen. Dadurch kann dem Rechnung getragen werden, dass vorzugsweise nur ein sehr geringer Anteil spannungsprägender Einheiten im Windpark vorgesehen ist. Werden beispielsweise nur 5% spannungsprägende Einheiten vorgesehen, könnte beispielsweise in einem Windpark mit Windenergieanlagen, die jeweils 10 Einspeisevorrichtungen aufweisen, abwechselnd eine Windenergieanlage nur stromprägende Einheiten aufweisen und eine andere jeweils eine spannungsprägende und neun stromprägende Einheiten aufweisen.

Vorzugsweise ist der Windpark dazu vorbereitet, ein Verfahren gemäß wenigstens einer der vorstehend beschriebenen Ausführungsformen eines Verfahrens zum Betreiben eines Windparks auszuführen. Der Windpark ist besonders dadurch dazu vorbereitet, dass er entsprechende Steuereinheiten in den Windenergieanlagen und/oder zu jeder Einspeisevorrichtung aufweist. In diesen Steuerungsvorrichtungen können die entsprechenden Verfahrensschritte implementiert sein.

Vorzugsweise ist vorgesehen, dass der Windpark eine zentrale Steuereinheit aufweist, um die Windenergieanlagen und insbesondere das Verfahren zum Betreiben des Windparks zu koordinieren. Die Koordination kann vorteilhaft so aussehen, dass die zentrale Steuereinheit Sollwerte, insbesondere Frequenz- und Spannungssollwerte für die spannungsprägenden Einheiten bereitstellt und Wirkleistungs- und Blindleistungssollwerte den stromprägenden Einheiten bereitstellt. Durch das Bereitstellen von solchen Sollwerten kann grundsätzlich eine Koordinierung des Windparks erreicht werden, ohne dass besonders hohe Anforderungen an kurze Reaktionszeiten und schnelles Reagieren auf Netzzustände durch diese zentrale Steuereinheit gewährleistet werden muss. Sie kann die Koordinierung des Windparks erreichen, sehr schnelle Regelungen können aber von jeder Windenergieanlage selbst erreicht werden.

Vorzugsweise weist der Windpark wenigstens eine Windenergieanlage gemäß einer der nachstehenden Ausführungsformen auf.

Erfindungsgemäß wird auch eine Windenergieanlage zum Austauschen elektrischer Leistung mit einem elektrischen Versorgungsnetz, über einen Netzanschlusspunkt, vorgeschlagen, die
- mehrere Einspeisevorrichtungen umfasst, wobei
- eine oder mehrere der Einspeisevorrichtungen als spannungsprägende Einheiten arbeiten und
- eine oder mehrere der Einspeisevorrichtungen als stromprägende Einheiten arbeiten, wobei
   - die spannungsprägenden Einheiten und die stromprägenden Einheiten auch in einem ungestörten Betrieb des elektrischen Versorgungsnetzes spannungsprägend bzw. stromprägend arbeiten.

Die Vorteile ergeben sich aus obigen Erläuterungen zum Windpark und/oder zum Verfahren zum Betreiben der Windenergieanlage. Auch für die Vorteile der nachfolgenden Ausführungsformen einer Windenergieanlage wird darauf verwiesen.

Vorzugsweise ist die Windenergieanlage, dadurch gekennzeichnet, dass
- jede Einspeisevorrichtung durch einen Leistungskennwert, insbesondere eine Nennleistung, gekennzeichnet ist und dass in Bezug auf die jeweiligen Leistungskennwerte
- die Windenergieanlage einen größeren Anteil an stromprägenden Einheiten als an spannungsprägenden Einheiten aufweist, wobei vorzugsweise,
- in Bezug auf eine Summe der Leistungskennwerte aller Einspeisevorrichtungen als 100%-Anteil die spannungsprägenden Einheiten einen Anteil von wenigstens 2% und maximal 25% aufweisen, vorzugsweise einen Anteil von maximal 15% und insbesondere einen Anteil von maximal 10% aufweisen.

Gemäß einer Ausführungsform wird eine Windenergieanlage vorgeschlagen, die dadurch gekennzeichnet ist, dass
- jede Einspeisevorrichtung wenigstens eine Steuervorrichtung aufweist und in der Steuervorrichtung jeweils wenigstens eine Statik hinterlegt ist, wobei
- die spannungsprägenden Einheiten wenigstens eine erste Statik aufweisen und
- die stromprägenden Einheiten wenigstens eine zweite Statik aufweisen, wobei
- jede Statik jeweils einen Zusammenhang, besonders linearen Zusammenhang beschreibt,
- zwischen einer elektrischen Spannung der Windenergieanlage und einer einzuspeisenden oder eingespeisten Blindleistung, oder
- zwischen einer Frequenz der Windenergieanlage und einer einzuspeisenden oder eingespeisten Wirkleistung, und wobei
   - die erste Statik eine kleinere Steigung als die zweite Statik aufweist.

Vorzugsweise ist die Windenergieanlage dazu vorbereitet, ein Verfahren nach einem der vorstehenden Ausführungsformen des Verfahrens zum Betreiben auszuführen, und/oder in einem Windpark gemäß einer vorstehenden Ausführungsform eingesetzt zu werden.

Nachfolgend wird die Erfindung exemplarisch anhand von Ausführungsbeispielen unter Bezugnahme auf die begleitenden Figuren näher erläutert.
- Figur 1: zeigt eine Windenergieanlage in einer perspektivischen Darstellung.
- Figur 2: zeigt einen Windpark in einer schematischen Darstellung.
- Figur 3: zeigt schematisch mehrere Leistungsschränke einer Windenergieanlage mit Leistungsaufteilungen zwischen strom- und spannungsprägenden Einheiten.
- Figur 4: zeigt ein Diagramm mit unterschiedlichen Statiken einer Windenergieanlage nach Fig. 3.
- Figur 5: zeigt schematisch einen Windpark und einige Details einer Steuerung der gezeigten Windenergieanlage.
- Figur 6: verdeutlicht das Zusammenspiel einer spannungsprägenden Einheit mit einer stromprägenden Einheit.

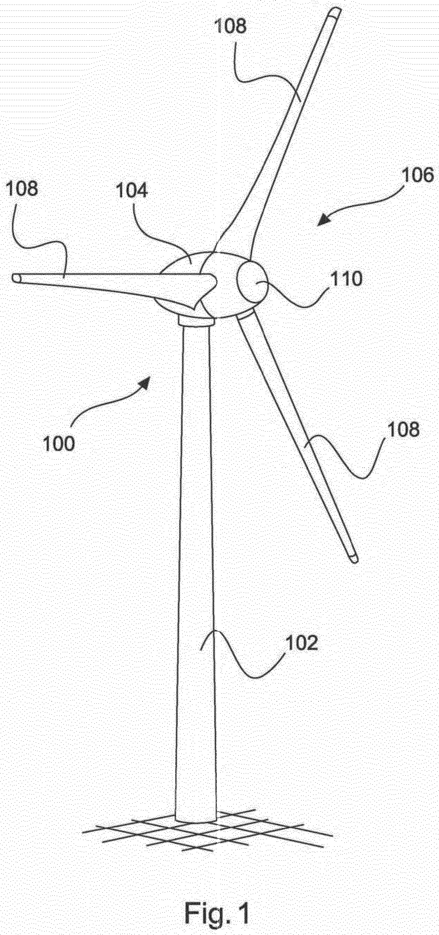

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

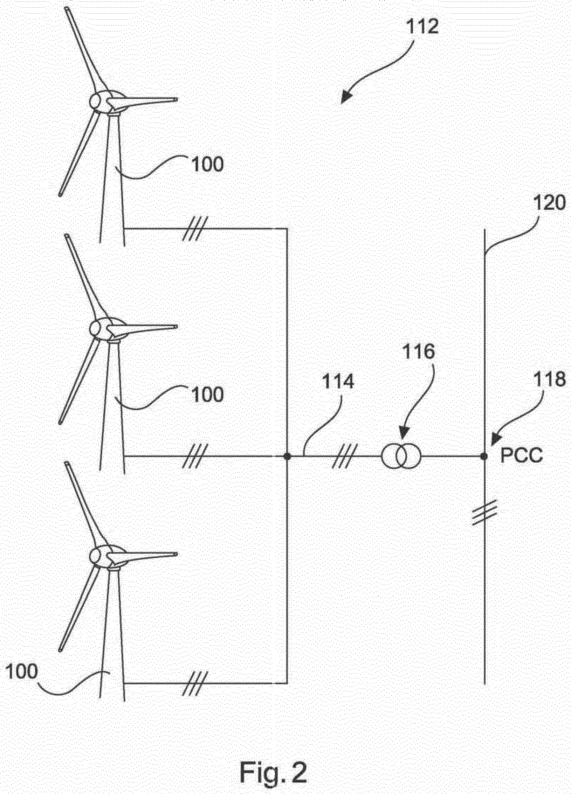

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, in dem beispielsweise auch ein Transformator am Ausgang jeder Windenergieanlage 100 vorhanden ist, um nur ein anderes Ausführungsbeispiel zu nennen.

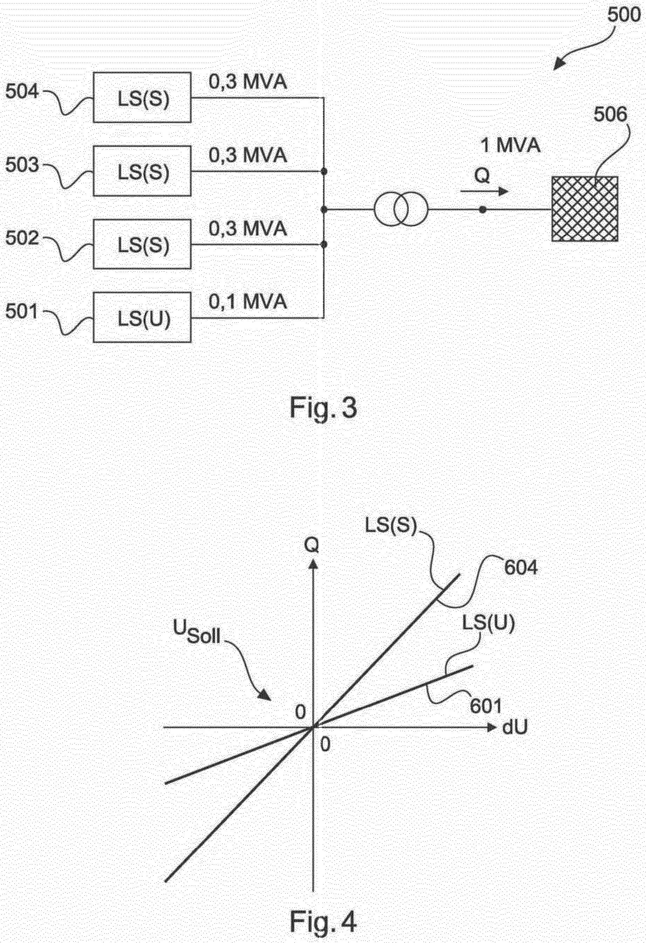

Figur 3 veranschaulicht eine Windenergieanlage 500, die auch repräsentativ für andere umrichtergeführte Einspeisevorrichtungen steht. Diese weist in dem gezeigten Beispiel zumindest vier Leistungsschränke 501 bis 504 auf. Der erste Leistungsschrank 501 ist hier als spannungsprägender Leistungsschrank vorgesehen. Er bildet somit eine spannungsprägende Einheit, oder kann mehrere spannungsprägende Einheiten beinhalten. Dieser spannungsprägende Leistungsschrank 501 soll besonders eine Spannung vorgeben. Dabei soll er auch Leistung, insbesondere Blindleistung Q, einspeisen können, aber nur in einem geringen Umfang. Beispielhaft ist hier ein Wert von 0,1 MVA angegeben.

Die drei übrigen Leistungsschränke 502 - 504 sind als stromprägende Leistungsschränke, also als stromprägende Einheiten, vorgesehen. Jeder stromprägende Leistungsschrank kann auch mehrere stromprägende Einheiten beinhalten. Jeder dieser Leistungsschränke soll eine größere Blindleistung Q als der erste Leistungsschrank 501 einspeisen können. Beispielhaft ist hier als dimensionierende Größe für jeden der Leistungsschränke 502 - 504 ein Blindleistungswert von jeweils 0,3 MVA angegeben. Zusammen können diese vier Leistungsschränke 501 - 504 eine Blindleistung Q in Höhe von 1 MVA in das beispielhaft gezeigte Netz 506 einspeisen. Auch diese Aufteilung dient primär dem Zwecke der Veranschaulichung.

Figur 3 soll aber besonders die Aufteilung verdeutlichen, demnach wenigstens eine Einheit spannungsprägend arbeitet, hier der Leistungsschrank 501, und dabei wenig Blindleistung einspeisen kann, wohingegen weitere Einheiten, oder gegebenenfalls nur eine weitere Einheit, stromprägend arbeiten können, hier die Leistungsschränke 502 - 504, und auch zum Spannungsstützen viel Blindleistung Q einspeisen können. Figur 3 veranschaulicht dabei die generelle Aufteilung zwischen spannungsprägenden Einheiten und stromprägenden Einheiten, die hier 10% zu 90% beträgt. Das kann auch in Bezug auf Wirkleistung gelten.

Figur 4 veranschaulicht für eine Windenergieanlage, gemäß Figur 3, unterschiedliche Statiken, die eine Blindleistung Q in Abhängigkeit einer Spannungsabweichung dU angeben. Nach den gezeigten Kennlinien sollen die entsprechenden Leistungsschränke 501 - 504 der Figur 3 gesteuert werden, nämlich so, dass der Leistungsschrank 501, der spannungsprägend arbeitet, nach der Kurve 601 arbeitet, wohingegen die stromprägenden Leistungsschränke 502 - 504 jeweils nach der Kurve 604 arbeiten. Jeder der Leistungsschränke 502 - 504 speist somit bei gleicher Spannungsabweichung, also bei gleichem dU in dem gezeigten Beispiel dreimal so viel Blindleistung Q ein, wie der spannungsprägende Leistungsschrank 501.

Wobei der spannungsprägende Leistungsschrank 501 die Spannungsabweichung dU über eine Sollspannung entsprechend der sich einstellenden Blindleistung Q anpasst und die stromprägenden Schaltschränke die Blindleistung Q entsprechend der erfassten Spannungsabweichung dU anpassen. Diese Spannungsabweichung kann an Ausgangsklemmen des Wechselrichters erfasst werden.

Die Grafik der Figur 4 zeigt dabei in ihrem Ursprung, also dem Mittelpunkt des Koordinatenkreuzes, den Blindleistungswert 0 als auch die Differenzspannung dU mit dem Wert 0. Dass die Differenzspannung dU den Wert 0 aufweist, bedeutet, dass die Spannung dort den Sollwert Uₛₒₗₗ aufweist. Besonders der spannungsprägende Leistungsschrank 501 führt den Spannungswert so nach, dass sich eine Blindleistung nahe null ergibt.

Figur 4 zeigt Statiken für eine Blindleistung in Abhängigkeit einer Spannungsabweichung. In gleicher Art und Weise werden auch Statiken für eine Wirkleistung in Abhängigkeit einer Frequenzabweichung vorgeschlagen. Besonders könnte in Figur 4 an der Abszisse die Spannungsabweichung dU gegen eine Frequenzabweichung df und an der Ordinate die resultierende Blindleistung Q gegen eine resultierende Wirkleistung P getauscht werden. Es ergibt sich dann eine Darstellung für Statiken für eine Wirkleistung in Abhängigkeit einer Frequenzabweichung. Auch dafür wird vorgeschlagen, dass das Erstversorgungsmittel, also hier die stromprägenden Leistungsschränke 502 - 504, jeweils mehr Wirkleistung bei gleicher Frequenzabweichung einspeisen, als das Erstversorgungsmittel, also hier der spannungsprägende Leistungsschrank 501.

Sinngemäß speist auch hier der spannungsprägende Leistungsschrank 501 eine Spannung mit der Frequenz f entsprechend der sich einstellenden Wirkleistung ein und die stromprägenden Schaltschränke speisen die Wirkleistung entsprechend der erfassten Frequenz bzw. Frequenzabweichung ein.

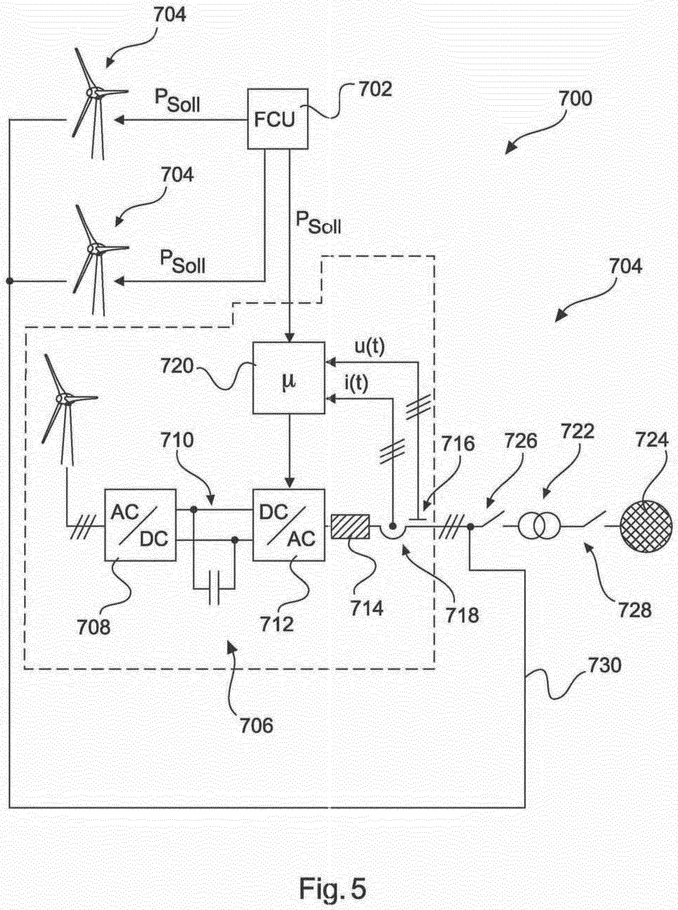

Figur 5 zeigt schematisch einen Windpark 700 mit einer zentralen Parksteuereinheit 702 mit exemplarisch drei Windenergieanlagen 704, von denen zwei nur durch ein Symbol angedeutet sind und bei einer zusätzlich schematisch eine Steuerungseinrichtung 706 gezeigt ist.

Die gezeigte Steuerungseinrichtung 706 weist eine Gleichrichteinheit 708 mit einem angeschossenen Gleichspannungszwischenkreis 710 und einem nachgeschalteten Wechselrichter 712 auf. Die Gleichrichteinheit 708 mit dem Gleichspannungszwischenkreis 710 und dem Wechselrichter 712 können auch zusammen als Umrichter bezeichnet werden.

Die Gleichrichteinheit 708 wird von einem Generator der Windenergieanlage gespeist, was in Figur 5 nur angedeutet ist. Die so erhaltene Energie bzw. Leistung wird von der Gleichrichteinheit 708 gleichgerichtet und auf dem Gleichspannungszwischenkreis 710 bereitgestellt. Der Wechselrichter 712 erzeugt daraus eine dreiphasige Wechselspannung bzw. Wechselstrom. Dazu ist an dem Wechselrichter eine Drossel 714 angeschlossen, auf die der Wechselrichter abgestimmt ist. Am Ausgang dieser Drossel 714 ist somit eine Spannung u(t) und ein Strom i(t) messbar, und es ist auch zum Messen ein Spannungsmessmittel 716 und ein Strommessmittel 718 vorgesehen. Die so erfasste Spannung und der so erfasste Strom werden zu einer Wechselrichtersteuerung 720 zurückgeführt, und davon abhängig steuert diese Wechselrichtersteuerung 720 den Wechselrichter 712 an.

Die zentrale Parksteuereinheit 702 kann an jede Windenergieanlage 704 einen Leistungssollwert Pₛₒₗₗ übertragen. Wenn die Windenergieanlagen 704 jeweils gleich groß sind, kommt auch in Betracht, dass diese Werte gleich sind. Tatsächlich sollen diese Leistungssollwerte Pₛₒₗₗ nur repräsentativ für mögliche Leistungssollwerte stehen, die auch unterschiedliche Werte aufweisen können, oder als relative Werte, bspw. Prozentwerte, übertragen werden können.

In der dargestellten Steuerungseinrichtung 706 der einen Windenergieanlage 704 wird verdeutlicht, dass dieser Leistungssollwert Pₛₒₗₗ der Wechselrichtersteuerung 720 übergeben wird. Es kommen in der Windenergieanlage 704 aber auch andere Steuerungs- oder Auswertungsarchitekturen in Betracht.

Die in Figur 5 gezeigte Steuerungseinrichtung 706 kann als stromprägende Einheit oder als spannungsprägende Einheit arbeiten. Wenn sie als spannungsprägende Einheit arbeitet, wird besonders die rückgeführte Spannung u(t) zur Steuerung des Wechselrichters 712 verwendet. Dieser kann dann ein Spannungssignal so erzeugen und ausgeben, dass es besonders einem vorgegebenen Spannungsverlauf entspricht. Der Wechselrichter arbeitet dadurch spannungsprägend.

Er kann auch stromprägend arbeiten, indem er sich im Wesentlichen an dem erfassten und zurückgeführten Strom i(t) orientiert und ein entsprechendes Stromsignal erzeugt, also so arbeitet, dass sein Ausgang besonders dem Strom gemäß einem Stromsollwert nachgeführt wird.

Bei dieser Strom- und Spannungsprägung geht es besonders darum, dass das konkrete Sinussignal, das der Wechselrichter erzeugt bzw. zu erzeugen versucht, vorgegeben wird. Entsprechend sind in der Figur 5 zur Rückführung für die Spannung und den Storm die Augenblickswerte u(t) bzw. i(t) dargestellt. Natürlich kann die Wechselrichtersteuerung 720 außerdem auch die Amplitude der jeweiligen Signale im Sinne eines Effektivwertes auswerten und verwenden, falls nötig. Auch dieses Zurückführen der Augenblickswerte ist jeweils phasenweise zu verstehen, es werden also drei Stromwerte und drei Spannungswerte jeweils zurückgeführt.

Somit kann der Wechselrichter 712 auf unterschiedliche Arten arbeiten und dabei eine Leistung erzeugen und über einen Parktransformator 722, der auch vereinfacht als Parktrafo bezeichnet werden kann, in das Netz 724 einspeisen. Die übrigen Windenergieanlagen können über denselben Parktrafo 722 in das elektrische Versorgungsnetz 724 einspeisen.

Außerdem ist sowohl parkseitig als auch zum elektrischen Versorgungsnetz 724 hin jeweils ein Trennschalter 726 bzw. 728 vorgesehen. Vor dem Trennschalter 726 ist eine Verbindungsleitung zu den übrigen Windenergieanlagen 704 angedeutet, die hier für ein Parknetz 730 steht.

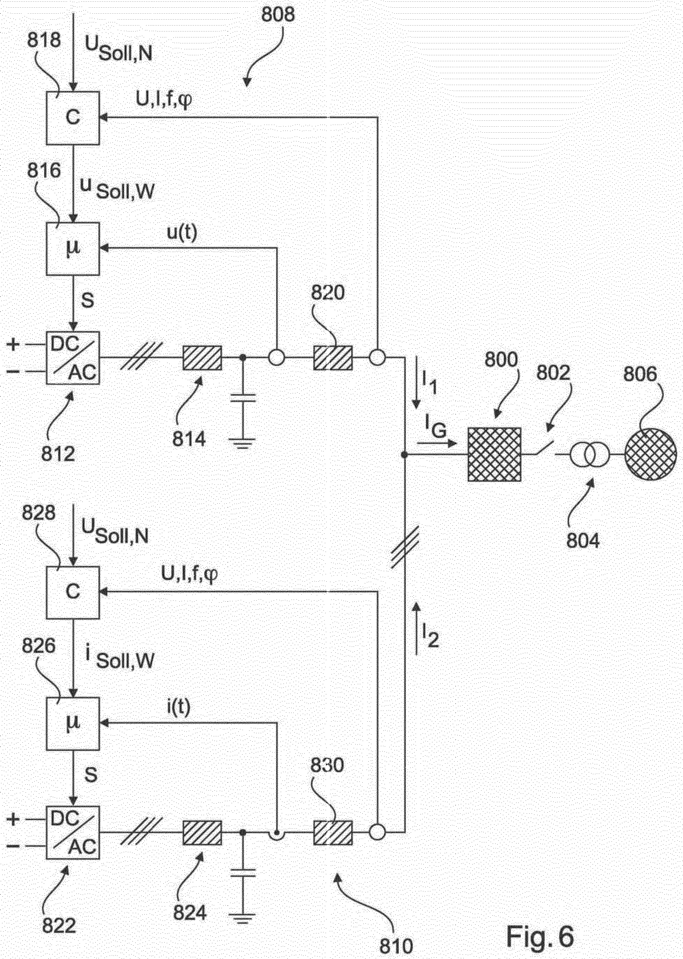

Figur 6 zeigt veranschaulichend eine Verbindungsstruktur 800, die über einen Trennschalter 802 und einen Verbindungstrafo 804 an ein elektrisches Versorgungsnetz 806 ankoppelbar ist. Die Verbindungsstruktur 800 kann bspw. eine Verbindung mehrerer strom- oder spannungsprägender Einheiten sein, die gemeinsam elektrische Leistung über die Verbindungsstruktur bereitstellen. Die Verbindungsstruktur kann bspw. eine Verknüpfung aller Leistungsschränke in einer Windenergieanlage bilden oder umfassen.

Veranschaulichend sind eine spannungsprägende Einheit 808 und eine stromprägende Einheit 810 gezeigt, die selbst auch Teil der Verbindungsstruktur 800 sind.

Die spannungsprägende Einheit 808 weist einen spannungsprägenden Wechselrichter 812 auf, der eine Spannung u(t) an seinem Ausgang erzeugt und die besonders am Ausgang des angedeuteten ersten Ausgangsfilters 814 gemessen wird. Die Spannung u(t) wird ständig gemessen und in den ersten Mikrocontroller 816 zurückgeführt. Der erste Mikrocontroller 816 wertet insoweit die Augenblickswerte dieser gemessenen Spannung u(t) aus. Auch diese Messwerte sind, genauso wie die ausgegebene Spannung, dreiphasig. Zur Erläuterung der Figur 6 ist es aber nicht erforderlich, auf diese Dreiphasigkeit einzugehen. Das gilt auch für die stromprägende Einheit 810.

Der erste Mikrocontroller 816 erhält außerdem ein Spannungssignal u_{soll,w}, das die einzustellende Spannung u(t) nach Betrag, Frequenz und Phase spezifiziert.

Dieser Sollwert u_{soll,w} wird in der ersten Wechselrichtersteuerung 818 erzeugt. Er hängt ab von einer Sollspannung U_{soll,N} und den gemessenen Werten U, I, f, φ, die am Ausgang der ersten Netzdrossel 820 gemessen werden.

Die stromprägende Einheit 810, die stromprägend arbeitet, weist einen stromprägenden Wechselrichter 822 auf, der ähnlich wie der spannungsprägende Wechselrichter 812 arbeitet, aber auf einen Ausgangsstrom i(t) regelt. Dieser Ausgangsstrom i(t) wird am Ausgang des angedeuteten zweiten Ausgangsfilters 824 erfasst und in dem zweiten Mikrocontroller 826 ausgewertet. Der zweite Mikrocontroller 826 erhält somit einen Stromsollwert i_{soll,w}, der den zu erzeugenden Strom i(t) nach Betrag, Frequenz und Phase vorgibt. Der zweite Mikrocontroller 826 steuert entsprechend die Schalthandlungen in dem stromprägenden Wechselrichter 822, was durch das Bezugszeichen S angedeutet ist. Entsprechend steuert im Übrigen der erste Mikrocontroller 816 Schalthandlungen in dem Wechselrichter 812.

Der Stromsollwert i_{soll, w_}wird in der zweiten Wechselrichtersteuerung 828 bestimmt. Er hängt ab von der Spannung U, dem Strom I, der Frequenz f und dem Phasenwinkel φ und diese Größen werden am Ausgang der zweiten Netzdrossel 830 erfasst. Auch die zweite Wechselrichtersteuerung 828 empfängt auch noch als Eingangsgröße eine Sollspannung U_{soll,N}. Die erste und zweite Wechselrichtersteuerung 818 und 828 können auch in einer gemeinsamen Wechselrichtersteuerung zusammengefasst werden.

Die spannungsprägende Einheit 808 erzeugt somit im Ergebnis einen ersten Strom I₁ und die stromprägende Einheit 810 erzeugt im Ergebnis einen zweiten Strom I₂. Diese beiden Ströme I₁ und I₂ summieren sich zu dem gemeinsamen Strom I_{G}. Dieser fließt veranschaulichend in das symbolisierte Parknetz 800 ein. Das ist veranschaulichend zu verstehen, weil auch die spannungsprägende Einheit 808 und die stromprägende Einheit 810 Teil des Parknetzes 800 sind. Insoweit fließt der gemeinsame Strom I_{G} in den verbleibenden Teil des Parknetzes.

Im Betrieb, wenn beispielsweise ein Blindleistungssprung oder ein Phasensprung im Parknetz 800 auftritt, macht sich das in dem Gesamtstrom I_{G} bemerkbar. Weil der Ausgangsstrom I₂ der stromprägenden Einheit 810 von diesem geregelt wird, führt eine Änderung des gemeinsamen Stroms I_{G} somit zunächst nur zu einer Änderung des ersten Stroms I₁ der spannungsprägenden Einheit 808.

Die Änderung des gemeinsamen Stroms I_{G} hat somit zunächst zu einer Änderung des ersten Stroms I₁ geführt und das hat die erste Wechselrichtersteuerung 818 erfasst. Die erste Wechselrichtersteuerung 818 erfasst daraus in Abhängigkeit einer Blindleistungsstatik oder Wirkleistungsstatik einen neuen Wert für eine Spannungsamplitude und/oder eine Frequenz. Entsprechend wird das Spannungssollsignal u_{soll,w} angepasst und an den ersten Mikrocontroller 816 übergeben. Dieser steuert dann entsprechend den spannungsprägenden Wechselrichter 812 an. Das führt entsprechend zu einer Änderung der Spannungsamplitude und/oder der Frequenz der Spannung und das wird von der stromprägenden Einheit 810 durch die Messung am Ausgang der zweiten Netzdrossel 830 gemessen und in der zweiten Wechselrichtersteuerung 828 ausgewertet. Davon abhängig wird dann ein neuer Blindleistungswert und/oder ein neuer Wirkleistungswert berechnet, nämlich abhängig von der zugrunde liegenden Blindleistungsstatik oder Wirkleistungsstatik. Entsprechend wird ein Sollstromsignal i_{soll,w} vorgegeben und dem zweiten Mikrocontroller 826 übergeben. Dieser steuert dann den stromprägenden Wechselrichter 822 entsprechend an. Das Ergebnis ist, dass sich nun der zweite Strom I₂ ändert, wodurch sich der erste Strom I₁ auch ändert und das wiederum zu einer neuen Anpassung durch die erste Wechselrichtersteuerung 818 führt, nämlich wieder basierend auf den entsprechenden Statiken, also der Blindleistungsstatik und/oder der Wirkleistungsstatik.

Im Ergebnis werden sich somit die spannungsprägende Einheit 808 und die stromprägende Einheit 810 so aufeinander einstellen, dass sie eine entsprechende Wirk- oder Blindleistung entsprechend der für sie relevanten Statik bei gleicher Spannungsabweichung bzw. gleicher Frequenz einspeisen. Es wurde somit erkannt, dass Systemdienstleistungen aus Windenergieanlagen bekannt sind. Aktuell sind diese aber an die physikalischen Eigenschaften der früher dominierenden Einspeisetechnologie, die von Großkraftwerken mit Synchronmaschinen ausgeht, angepasst.

Es wurde zudem erkannt, dass kurz- und mittelfristig netzbetriebspunktabhängig die Einspeisetechnologie die Systemverantwortung übernehmen sollte, welche gerade dominiert, also konventionell oder umrichterbasiert. Die einfache Nachbildung konventioneller, meist träger Erzeuger durch Umrichter, erscheint nicht zielführend.

Trotzdem kann es u.U. notwendig sein, auch die Spannungseinprägung zukünftig durch umrichterbasierte Systeme zu gewährleisten. Dabei müssen die Umrichter nicht stromeinprägend, sondern spannungseinprägend arbeiten.

Dies hat folgende Vorteile:
Eine initiale Spannungsprägung beim Schwarzstart und dem Netzwiederaufbau eines Energieversorgungsnetzes kann erreicht werden, wobei hier vorgeschlagen wird, die Verwendung spannungsprägender Umrichter nicht darauf zu beschränken.

Eine Bereitstellung einer Spannungsprägung ohne zusätzliche Energiespeicher und ohne eine Anpassung der Regelungsstrategie kann möglich werden. Dafür kann einer Zwischenkreisregelung durch netzseitigen Umrichter vorgeschlagen werden.

Eine Beschränkung der Frequenzgradienten in Netzen mit einer hohen Umrichterpenetration und Schutz der verbleibenden direkt gekoppelten Maschinen wird möglich.

Eine statische Lastsymmetrierung kann ermöglicht werden.

Ein verbessertes Fehlerverhalten und Durchfahren von Fehlern kann erreicht werden, und damit erweiterte Fehlereigenschaften.

Eine Bereitstellung von initialen Fehlerströmen zum Auslösen des Netzschutzes ist erreichbar.

Eine instantane Erzeugerreaktion auf Frequenzeinbrüche und Spannungseinbrüche wird ermöglicht, z.B. im Falle eines Systemsplits.

Auch eine verbesserte Frequenz- und Spannungsstabilität ist erreichbar.

Da ein Umrichtersystem bei einer Spannungsprägung eine gewisse Leistungsreserve vorhalten sollte, damit der spannungsprägende Betrieb nicht durch die Stromgrenzen der Umrichter gefährdet ist, weisen spannungsprägende Umrichter meistens eine kleinere Leistungsdichte auf und sind teurer.

Ein angestrebtes Ziel ist es damit auch, die spannungsprägenden Eigenschaften möglichst kostengünstig und damit mit möglichst wenig spannungsprägenden Umrichtereinheiten bereitzustellen.

Die Erfindung, zumindest einige Ausführungsformen betrifft Steuerungs- und Regelungsstrategien für Windenergieanlagen und anderer leistungselektronisch gekoppelter Einspeiser, um im Netzparallelbetrieb spannungsprägende Eigenschaften bereitzustellen.

Erreicht werden soll dadurch eine Erhöhung des umrichterbasierten Erzeugungsanteils in Verbundnetzen und eine Entwicklung eines Regelungskonzeptes für Netze, welche zeitweise fast vollständig durch umrichtergekoppelte Einspeisung erneuerbarer Energien gefahren bzw. realisiert werden, ohne nennenswerte Nachteile in der Systemsicherheit zu haben.

Dabei wurde auch folgendes Problem erkannt: Konventionelle Kraftwerke, nämlich solche mit direkt gekoppelten Synchronmaschinen, weisen spannungsprägende Eigenschaften physikalisch auf. Da die meisten regenerativen Einspeiser nicht über direkt gekoppelte Synchronmaschinen verfügen, bzw. der Einsatz aus anderen Gesichtspunkten nicht sinnvoll ist, stehen diese zukünftig nicht zur Verfügung.

Für folgende Aufgaben können Lösungen vorgeschlagen werden:
- Bereitstellung von spannungsprägenden Eigenschaften durch umrichtergespeiste Einspeiser.
- Möglicher Schwarzstart mit regenerativen Kraftwerkskapazitäten.
- Beschleunigter Netzwiederaufbau mit regenerativen Kraftwerkskapazitäten.
- Netzintegration eines zeitweise sehr hohen Anteils regenerativer Energien im Netz.
- Sicherer Netzbetrieb auch in Netzen, die zeitweise fast vollständig umrichterbasiert versorgt werden.
- Übernahme von Systemverantwortung in der elektrischen Energieversorgung durch Windenergieanlagen oder Windparks.
- Vermeiden eines pseudo-technischen Deckels beim Ausbau regenerativer Energieerzeuger.
- Substitution konventioneller Kraftwerke.
- Erhöhung der Akzeptanz von regenerativen Einspeisern bei Netzbetreibern.

Erfindungsgemäß, zumindest gemäß einer oder mehrerer Ausführungsformen wurde somit das Folgende erkannt.

Da leistungselektronische Einspeiser meist aus einer gewissen Anzahl paralleler Einheiten bestehen, also besonders parallel geschalteter Umrichter oder Wechselrichter, welche Leistung mit dem Netz austauschen, ist die vorgeschlagene Lösung einen kleinen Teil der Einheiten für die eigentliche Spannungseinprägung einzusetzen und über eine kombinierte schnelle und dezentrale Steuerung die Leistung schnell auf die einzelnen Einheiten zu verteilen. So gelingt es mit nur wenigen Einheiten den gesamten Einspeiser spannungsprägend wirken zu lassen.

In einem ersten Schritt werden die Einheiten, welche Leistung mit dem Netz austauschen, in spannungsprägende und stromprägende Einheiten aufgeteilt. Dabei erscheint ein Verhältnis von z.B. 1:9 sinnvoll. Daher wird ein solches Verhältnis vorgeschlagen, insbesondere eines im Bereich von 1:5 bis 1:20, vorzugsweise 1:8 bis 1:16. Das Verhältnis kann aber auch netzsituationsabhängig angepasst werden. Es bezieht sich auf die Nennleistung jeder Einheit. Bei Einheiten gleicher Größe, was vorzugsweise vorgeschlagen wird, gibt das Verhältnis Anzahlen wieder, also die Anzahl spannungsprägender Einheiten zur Anzahl stromprägender Einheiten.

Die stromprägenden Einheiten werden dabei zur Leistungsaufteilung mit zwei Statiken betrieben:
Für die Blindleistung in Abhängigkeit der Spannung wird eine so genannte Q(U)-Statik vorgegeben. Dabei wird dem Umrichter eine Sollspannung vorgegeben. In Abhängigkeit der Abweichung von der Sollspannung speist der Umrichter dann eine Blindleistung ein.

Für die Leistung in Abhängigkeit der Frequenz wird eine so genannte P(f)-Statik vorgegeben. Dabei wird bei Nennfrequenz die Sollleistung, das kann eine vorgegebene Sollleistung oder angebotsabhängige Maximalleistung sein. Bei einer Frequenzabweichung wird die Leistung entsprechend einer Statik angepasst.

Die spannungsprägenden Einheiten werden ebenfalls mit zwei Statiken betrieben, jedoch in Abhängigkeit der jeweils anderen Führungsgröße. Sie steuern die Spannung in Abhängigkeit der sich gerade eingestellten Blindleistung, oder die Frequenz in Abhängigkeit der sich gerade eingestellten Wirkleistung.

Dabei unterschieden sich die beiden Systeme durch drei Punkte:
1. Bei Nennspannung und bei Nennfrequenz befinden sich die Arbeitspunkte der spannungsprägenden Umrichter jeweils bei null, oder nahe null.
2. Die Statiken der stromprägenden Einheiten sind deutlich steiler, nämlich etwa oder wenigstens ca. fünfmal steiler, als die der spannungsprägenden Einheiten. Eine Regelabweichung wird im statischen Fall also fast vollständig von den stromprägenden Einheiten bedient, weil es mehr stromprägende Einheiten sind, die eine steilere Statik aufweisen.
3. Die Nachführung der Sollwerte der spannungsprägenden Einheiten ist viel schneller, als die der stromprägenden Einheiten.

Tritt beispielsweise ein Frequenzdrift nach oben auf, was auf einen Leistungsüberschuss im Netz hindeutet, übernehmen die spannungsprägenden Umrichter initial vollständig die sich aus der Frequenz und der Phasenverschiebung ergebenen zusätzlichen Ströme. Das bedeutet, dass es eine Wirkleistungsaufnahme gibt, und die Frequenz im ersten Moment "festgehalten" wird.

Die Regelung führt die Sollfrequenz aber schnell den sich aus der Statik ergebenen Wert nach, nämlich entsprechend der sich ergebenen Leistung.

Die stromprägenden Umrichter sehen nun die Frequenzabweichung und erhöhen die Wirkleistung.

Das Gleiche gilt sinngemäß für die Spannung und die Blindleistung.

## Patentansprüche

1. Verfahren zum Betreiben einer Windenergieanlage (100) zum Austauschen elektrischer Leistung mit einem elektrischen Versorgungsnetz über einen Netzanschlusspunkt, wobei die Windenergieanlage (100) mehrere Einspeisevorrichtungen (808, 810) aufweist, oder eines Windparks (112) mit mehreren Windenergieanlagen (100) zum Austauschen elektrischer Leistung zwischen dem Windpark und einem elektrischen Versorgungsnetz, wobei jede der Windenergieanlagen (100) des Windparks eine oder mehrere Einspeisevorrichtungen (808, 810) aufweist, und wobei
- die Windenergieanlage bzw. der Windpark über einen Netzanschlusspunkt mit dem elektrischen Versorgungsnetz verbunden ist und die Leistung über den Netzanschlusspunkt ausgetauscht wird, wobei
- eine oder mehrere der Einspeisevorrichtungen (808, 810) als spannungsprägende Einheiten (808) arbeiten und
**gekennzeichnet dadurch, dass**
- eine oder mehrere der Einspeisevorrichtungen (808, 810) als stromprägende Einheiten (810) arbeiten, wobei insbesondere vorgesehen ist, dass
- die spannungsprägenden Einheiten (808) und die stromprägenden Einheiten (810) auch in einem ungestörten Betrieb des elektrischen Versorgungsnetzes spannungsprägend bzw. stromprägend arbeiten.

2. Verfahren nach Anspruch 1,
**dadurch gekennzeichnet, dass**
zum Betreiben des Windparks gleichzeitig
- spannungsprägende Einheiten (808) spannungsprägend Leistung mit dem elektrischen Versorgungsnetz austauschen und
- stromprägende Einheiten (810) stromprägend Leistung mit dem elektrischen Versorgungsnetz austauschen, wobei
- die stromprägenden Einheiten (810) im stromprägenden Betrieb jeweils einen in das elektrische Versorgungsnetz einzuspeisenden Einspeisestrom steuern und
- die spannungsprägenden Einheiten (808) im spannungsprägenden Betrieb eine Einspeisespannung zur Einspeisung in das elektrische Versorgungsnetz steuern, wobei insbesondere vorgesehen ist, dass
- sich die stromprägenden Einheiten (810) im stromprägenden Betrieb an die Einspeisespannung, die besonders im Windpark am Netzanschlusspunkt anliegt, anpassen, und/oder
- die spannungsprägenden Einheiten (808) im spannungsprägenden Betrieb jeweils einen Strom einspeisen, der zum Steuern der Einspeisespannung erforderlich ist und/oder der sich durch das Steuern der Einspeisespannung ergibt.

3. Verfahren nach Anspruch 1 oder 2,
**dadurch gekennzeichnet, dass**
im Falle einer Überfrequenz im elektrischen Versorgungsnetz
- die vom Windpark in das elektrische Versorgungsnetz eingespeiste Leistung verringert wird, wobei
- die spannungsprägenden Einheiten (808) zunächst in einem Anfangszeitraum ihre Einspeiseleistung verringern, um dadurch das Verringern der eingespeisten Leistung zu bewirken,
- die stromprägenden Einheiten (810) auf die spannungsprägenden Einheiten (808) folgend ihre Einspeiseleistung verringern, um in einem dem Anfangszeitraum folgenden Anschlusszeitraum das Verringern der eingespeisten Leistung zu bewirken, wenn die Verringerung der vom Windpark eingespeisten Leistung einen stationären Wert angenommen hat, wobei dann
- die spannungsprägenden Einheiten (808) dazu betrieben werden, eine Spannungshaltung durchzuführen und insbesondere in dem Anschlusszeitraum. das Verringern der vom Windpark eingespeisten Leistung den stromprägenden Einheiten (810) zu überlassen.

4. Verfahren nach Anspruch 3,
**dadurch gekennzeichnet, dass**
im Falle der Überfrequenz im elektrischen Versorgungsnetz
- Leistung vom Windpark aus dem elektrischen Versorgungsnetz aufgenommen und insbesondere verbraucht wird, wobei
- die spannungsprägenden Einheiten (808) dazu betrieben werden, die Leistung aus dem elektrischen Versorgungsnetz aufzunehmen, zumindest in dem Anfangszeitraum.

5. Verfahren nach einem der vorstehenden Ansprüche,
**dadurch gekennzeichnet, dass**
die stromprägenden Einheiten (810) so arbeiten, dass sie ihren Einspeisestrom in Abhängigkeit der Netzfrequenz nur ändern, wenn die Netzfrequenz von der Netznennfrequenz wenigstens um einen vorbestimmten Mindestbetrag abweicht.

6. Verfahren nach einem der vorstehenden Ansprüche,
**dadurch gekennzeichnet, dass**
- der Windpark mit einer Einspeisespannung in das elektrische Versorgungsnetz einspeist,
- auf Phasensprünge im elektrischen Versorgungsnetz geprüft wird, bei denen die Netzspannung einen Phasensprung aufweist, der zu einer Phasenverschiebung in der Netzspannung führt,
- im Falle eines Phasensprungs die spannungsprägenden Einheiten (808) in einem ersten Schritt zunächst Wirk- und/oder Blindleistung einspeisen, um Frequenz und/oder Phasenlage der Einspeisespannung zu halten, und
- beim Erkennen eines Phasensprungs der Netzspannung in einem zweiten Schritt eine Referenzfrequenz und/oder Referenzspannung der geänderten Netzspannung nachgeführt wird und
- die spannungsprägenden Einheiten (808) die Einspeisespannung entsprechend der Referenzfrequenz bzw. Referenzspannung nachführen.

7. Verfahren nach einem der vorstehenden Ansprüche,
**dadurch gekennzeichnet, dass**
- der Windpark einen spannungsprägenden Betrieb mit Leistungseinspeisung durch eine kombinierte Steuerung der spannungsprägenden Einheiten (808) und der stromprägenden Einheiten (810) realisiert, wobei
- die spannungsprägenden Einheiten (808) im Wesentlichen die Spannungsprägung und/oder dynamische Ausgleichsvorgänge vornehmen, und
- die stromprägenden Einheiten (810) im Wesentlichen eine stationäre Leistungseinspeisung vornehmen.

8. Verfahren nach einem der vorstehenden Ansprüche,
**dadurch gekennzeichnet, dass**
- jede Einspeisevorrichtung (808, 810) durch einen Leistungskennwert, insbesondere eine Nennleistung, gekennzeichnet ist und dass in Bezug auf die jeweiligen Leistungskennwerte
- der Windpark einen größeren Anteil an stromprägenden Einheiten (810) als an spannungsprägenden Einheiten (808) aufweist, wobei vorzugsweise,
- in Bezug auf eine Summe der Leistungskennwerte aller Einspeisevorrichtungen (808, 810) als 100%-Anteil die spannungsprägenden Einheiten (808) einen Anteil von wenigstens 2% und maximal 25% aufweisen, vorzugsweise einen Anteil von maximal 15% und insbesondere einen Anteil von maximal 10% aufweisen.

9. Verfahren nach einem der vorstehenden Ansprüche,
**dadurch gekennzeichnet, dass**
- die spannungsprägenden Einheiten (808) wenigstens eine erste Statik aufweisen und
- die stromprägenden Einheiten (810) wenigstens eine zweite Statik aufweisen, wobei
- jede Statik jeweils einen Zusammenhang, besonders linearen Zusammenhang beschreibt,
- zwischen einer elektrischen Spannung des Windparks und einer einzuspeisenden oder eingespeisten Blindleistung (Q) oder
- zwischen einer Frequenz des Windparks und einer einzuspeisenden oder eingespeisten Wirkleistung, und wobei
- die erste Statik eine kleinere Steigung als die zweite Statik aufweist.

10. Verfahren nach einem der vorstehenden Ansprüche,
**dadurch gekennzeichnet, dass**
- die spannungsprägenden Einheiten (808) jeweils wenigstens eine erste Blindleistungsstatik aufweisen, die jeweils einen Zusammenhang zwischen einer durch die spannungsprägende Einheit (808) im Windpark bereitzustellende elektrischen Spannung und einer durch die spannungsprägende Einheit (808) eingespeiste Blindleistung (Q) beschreibt, und
- die stromprägenden Einheiten (810) jeweils wenigstens eine zweite Blindleistungsstatik aufweisen, die jeweils einen Zusammenhang zwischen einer im Windpark erfassten elektrischen Spannung und einer durch die stromprägende Einheit (810) einzuspeisende Blindleistung (Q) beschreibt und
- die erste Blindleistungsstatik eine kleinere Steigung als die zweite Blindleistungsstatik aufweist, und/oder dass
- die spannungsprägenden Einheiten (808) jeweils wenigstens eine erste Wirkleistungsstatik aufweisen, die jeweils einen Zusammenhang zwischen einer im Windpark durch die spannungsprägende Einheit (808) bereitzustellenden Frequenz und einer durch die spannungsprägende Einheit (808) eingespeisten Wirkleistung beschreibt und,
- die stromprägenden Einheiten (810) jeweils wenigstens eine zweite Wirkleistungsstatik aufweisen, die jeweils einen Zusammenhang zwischen einer im Windpark erfassten Frequenz und einer durch die stromprägende Einheit (810) einzuspeisende Wirkleistung beschreibt und
- die erste Wirkleistungsstatik eine kleinere Steigung als die zweite Wirkleistungsstatik aufweist.

11. Verfahren nach einem der vorstehenden Ansprüche,
**dadurch gekennzeichnet, dass**
- die stromprägenden Einheiten (810) durch eine bzw. die erste Blindleistungsstatik so gesteuert werden, dass sie eine durch die spannungsprägende Einheit (808) im Energieerzeugungsnetz bereitzustellende elektrischen Spannung in Abhängigkeit einer durch die spannungsprägende Einheit (808) eingespeiste Blindleistung (Q) so einstellt, dass die eingespeiste Blindleistung (Q) auf einen Wert nahe null geregelt wird, insbesondere mit geringer stationärer Regelabweichung.

12. Windpark zum Austauschen elektrischer Leistung mit einem elektrischen Versorgungsnetz, über einen Netzanschlusspunk, umfassend
- mehreren Windenergieanlagen, wobei jede der Windenergieanlagen eine oder mehrere Einspeisevorrichtungen (808, 810) aufweist,
- eine oder mehrere der Einspeisevorrichtungen (808, 810) welche derart ausgeführt sind, dass diese als spannungsprägende Einheiten (808) arbeiten und spannungsprägend Leistung mit dem elektrischen Versorgungsnetz austauschen und
**dadurch gekennzeichnet, dass**
- eine oder mehrere der Einspeisevorrichtungen (808, 810) derart ausgeführt sind, dass diese als stromprägende Einheiten (810) arbeiten und stromprägend Leistung mit dem elektrischen Versorgungsnetz austauschen wobei
- die spannungsprägenden Einheiten (808) und die stromprägenden Einheiten (810) auch in einem ungestörten Betrieb des elektrischen Versorgungsnetzes spannungsprägend bzw. stromprägend arbeiten.

13. Windpark nach Anspruch 12, **dadurch gekennzeichnet, dass**
- jede Einspeisevorrichtung (808, 810) durch einen Leistungskennwert, insbesondere eine Nennleistung, gekennzeichnet ist und dass in Bezug auf die jeweiligen Leistungskennwerte
- der Windpark einen größeren Anteil an stromprägenden Einheiten (810) als an spannungsprägenden Einheiten (808) aufweist, wobei vorzugsweise,
- in Bezug auf eine Summe der Leistungskennwerte aller Einspeisevorrichtungen als 100%-Anteil die spannungsprägenden Einheiten (808) einen Anteil von wenigstens 2% und maximal 25% aufweisen, vorzugsweise einen Anteil von maximal 15% und insbesondere einen Anteil von maximal 10% aufweisen.

14. Windpark nach Anspruch 12 oder 13, **dadurch gekennzeichnet, dass**
- jede Windenergieanlage (100) oder jede Einspeisevorrichtung (808, 810) wenigstens eine Steuervorrichtung aufweist und in der Steuervorrichtung jeweils wenigstens eine Statik hinterlegt ist, wobei
- die spannungsprägenden Einheiten (808) wenigstens eine erste Statik aufweisen und
- die stromprägenden Einheiten (810) wenigstens eine zweite Statik aufweisen, wobei
- jede Statik jeweils einen Zusammenhang, besonders linearen Zusammenhang beschreibt,
- zwischen einer elektrischen Spannung des Windparks und einer einzuspeisenden oder eingespeisten Blindleistung (Q), oder
- zwischen einer Frequenz des Windparks und einer einzuspeisenden oder eingespeisten Wirkleistung, und wobei
- die erste Statik eine kleinere Steigung als die zweite Statik aufweist.

15. Windpark nach einem der Ansprüche 12 bis 14, **dadurch gekennzeichnet, dass**
- in wenigstens einer der Windenergieanlagen, insbesondere in allen Windenergieanlagen, jeweils wenigstens eine spannungsprägende und eine stromprägende Einheit (808,810) vorgesehen ist.

16. Windpark nach einem der Ansprüche 12 bis 15, **dadurch gekennzeichnet, dass**
- der Windpark dazu vorbereitet ist, ein Verfahren nach einem der Ansprüche 1 bis 11 auszuführen, insbesondere, dass
- der Windpark eine zentrale Steuereinheit aufweist, um die Windenergieanlagen und insbesondere das Verfahren zum Betreiben des Windparks zu koordinieren.

17. Windenergieanlage zum Austauschen elektrischer Leistung mit einem elektrischen Versorgungsnetz, über einen Netzanschlusspunkt, umfassend
- mehrere Einspeisevorrichtungen, wobei
- eine oder mehrere der Einspeisevorrichtungen derart ausgeführt sind, dass diese als spannungsprägende Einheiten (808) arbeiten und
**dadurch gekennzeichnet, dass**
- eine oder mehrere der Einspeisevorrichtungen derart ausgeführt sind, dass diese als stromprägende Einheiten (810) arbeiten, wobei
- die spannungsprägenden Einheiten (808) und die stromprägenden Einheiten (810) auch in einem ungestörten Betrieb des elektrischen Versorgungsnetzes spannungsprägend bzw. stromprägend arbeiten.

18. Windenergieanlage nach Anspruch 17, **dadurch gekennzeichnet, dass**
- jede Einspeisevorrichtung durch einen Leistungskennwert, insbesondere eine Nennleistung, gekennzeichnet ist und dass in Bezug auf die jeweiligen Leistungskennwerte
- die Windenergieanlage einen größeren Anteil an stromprägenden Einheiten (810) als an spannungsprägenden Einheiten (808) aufweist, wobei vorzugsweise,
- in Bezug auf eine Summe der Leistungskennwerte aller Einspeisevorrichtungen als 100%-Anteil die spannungsprägenden Einheiten (808) einen Anteil von wenigstens 2% und maximal 25% aufweisen, vorzugsweise einen Anteil von maximal 15% und insbesondere einen Anteil von maximal 10% aufweisen.

19. Windenergieanlage nach Anspruch 17 oder 18, **dadurch gekennzeichnet, dass**
- jede Einspeisevorrichtung wenigstens eine Steuervorrichtung aufweist und in der Steuervorrichtung jeweils wenigstens eine Statik hinterlegt ist, wobei
- die spannungsprägenden Einheiten (808) wenigstens eine erste Statik aufweisen und
- die stromprägenden Einheiten (810) wenigstens eine zweite Statik aufweisen, wobei
- jede Statik jeweils einen Zusammenhang, besonders linearen Zusammenhang beschreibt,
- zwischen einer elektrischen Spannung der Windenergieanlage und einer einzuspeisenden oder eingespeisten Blindleistung (Q), oder
- zwischen einer Frequenz der Windenergieanlage und einer einzuspeisenden oder eingespeisten Wirkleistung, und wobei
- die erste Statik eine kleinere Steigung als die zweite Statik aufweist.

20. Windenergieanlage nach einem der Ansprüche 17 bis 19,
**dadurch gekennzeichnet, dass**
- die Windenergieanlage dazu vorbereitet ist, ein Verfahren nach einem der Ansprüche 1 bis 11 auszuführen.

## Claims

1. A method for operating a wind power installation (100) for exchanging electrical power with an electrical power grid via a grid connection point, wherein the wind power installation (100) comprises a plurality of feed-in devices (808, 810), or a wind farm (112) for exchanging electrical power between the wind farm and an electrical supply grid, wherein
- each of the wind power installations (100) has one or more feeding-in devices (808, 810), and wherein
- the wind power installation or the wind farm is connected to the electrical supply grid by way of a grid connection point and the power is exchanged by way of the grid connection point, wherein
- one or more of the feeding-in devices (808, 810) operate as voltage-impressing units (808) and
**characterized in that**, that
- one or more of the feeding-in devices (808, 810) operate as current-impressing units (810), it being provided in particular that
- the voltage-impressing units (808) and the current-impressing units (810) also operate in a voltage-impressing and current-impressing manner during undisturbed operation of the electrical supply grid.

2. The method as claimed in claim 1,
**characterized in that**
for operating the wind farm, at the same time
- voltage-impressing units (808) exchange power with the electrical supply grid in a voltage-impressing manner and
- current-impressing units (810) exchange power with the electrical supply grid in a current-impressing manner, wherein
- the current-impressing units (810) in current-impressing operation respectively control a feed-in current that is to be fed into the electrical supply grid and
- the voltage-impressing units (808) in voltage-impressing operation control a feed-in current that is to be fed into the electrical supply grid, it being provided in particular that
- the current-impressing units (810) adapt themselves in current-impressing operation to the feed-in voltage, which particularly in a wind farm is present at the grid connection point, and/or
- the voltage-impressing units (808) in voltage-impressing operation respectively feed in a current that is required for controlling the feed-in voltage and/or is obtained by controlling the feed-in voltage.

3. The method as claimed in claim 1 or 2,
**characterized in that**
in the case of an overfrequency in the electrical supply grid,
- the power fed into the electrical supply grid by the wind farm is reduced, wherein
- the voltage-impressing units (808) first reduce their feed-in power in an initial time period, in order thereby to bring about the reduction in the power fed in,
- the current-impressing units (810) follow the voltage-impressing units (808) by reducing their feed-in power, in order to bring about the reduction in the power fed in in a subsequent time period following the initial time period, when the reduction of the power fed in at the wind farm has assumed a steady value, wherein then
- the voltage-impressing units (808) are operated to carry out a process of maintaining the voltage and, in particular in the subsequent time period, leave the reduction of the power fed in by the wind farm to the current-impressing units (810).

4. The method as claimed in claim 3,
**characterized in that**
in the case of the overfrequency in the electrical supply grid
- power is taken by the wind farm from the electrical supply grid and in particular is consumed, wherein
- the voltage-impressing units (808) are operated to take up the power from the electrical supply grid, at least in the initial time period.

5. The method as claimed in one of the preceding claims,
**characterized in that**
the current-impressing units (810) operate in such a way that they only change their feed-in current in dependence on the grid frequency if the grid frequency deviates from the rated grid frequency by at least a predetermined minimum amount.

6. The method as claimed in one of the preceding claims,
**characterized in that**
- the wind farm feeds into the electrical supply grid with a feed-in voltage,
- a check is made for phase jumps in the electrical supply grid, in the case of which the grid voltage has a phase jump that leads to a phase shift in the grid voltage,
- in the case of a phase jump, the voltage-impressing units (808) in a first step initially feed in real and/or reactive power, in order to maintain the frequency and/or phase position of the feed-in voltage, and
- if a phase jump of the grid voltage is detected, in a second step a reference frequency and/or a reference voltage of the changed grid voltage is controlled as a dependent variable and
- the voltage-impressing units (808) control the feed-in voltage as a dependent variable in a way corresponding to the reference frequency or reference voltage.

7. The method as claimed in one of the preceding claims,
**characterized in that**
- the wind farm realizes a voltage-impressing mode with power feed-in by a combined control of the voltage-impressing units (808) and the current-impressing units (810), wherein
- the voltage-impressing units (808) essentially perform the voltage impression and/or dynamic compensating operations, and
- the current-impressing units (810) essentially perform a steady-state power feed-in.

8. The method as claimed in one of the preceding claims,
**characterized in that**
- each feeding-in device (808, 810) is **characterized by** a power coefficient, in particular a rated power, and **in that**, with reference to the respective power coefficients,
- the wind farm has a greater proportion of current-impressing units (810) than voltage-impressing units (808), wherein preferably,
- with reference to a sum of the power coefficients of all of the feeding-in devices (808, 810) as a 100% proportion, the voltage-impressing units (808) have a proportion of at least 2% and at most 25%, preferably a proportion of at most 15% and in particular a proportion of at most 10%.

9. The method as claimed in one of the preceding claims,
**characterized in that**
- the voltage-impressing units (808) have at least one first droop and
- the current-impressing units (810) have at least one second droop, wherein
- each droop respectively describes a relationship, particularly a linear relationship,
- between an electrical voltage of the wind farm and a reactive power (Q) that is to be fed in or has been fed in or
- between a frequency of the wind farm and a real power that is to be fed in or has been fed in, and wherein
- the first droop has a smaller gradient than the second droop.

10. The method as claimed in one of the preceding claims,
**characterized in that**
- the voltage-impressing units (808) respectively have at least one first reactive-power droop, which respectively describes a relationship between an electrical voltage to be provided by the voltage-impressing unit (808) in the wind farm and a reactive power (Q) that is fed in by the voltage-impressing unit (808) and
- the current-impressing units (810) respectively have at least one second reactive-power droop, which respectively describes a relationship between an electrical voltage recorded in the wind farm and a reactive power (Q) to be fed in by the current-impressing unit (810) and
- the first reactive-power droop has a smaller gradient than the second reactive-power droop, and/or **in that**
- the voltage-impressing units (808) respectively have at least one first real-power droop, which respectively describes a relationship between a frequency to be provided by the voltage-impressing unit (808) in the wind farm and a real power that is fed in by the voltage-impressing unit (808),
- the current-impressing units (810) respectively have at least one second real-power droop, which respectively describes a relationship between a frequency recorded in the wind farm and a real power to be fed in by the current-impressing unit (810) and
- the first real-power droop has a smaller gradient than the second real-power droop.

11. The method as claimed in one of the preceding claims,
**characterized in that**
- the voltage-impressing units (810) are controlled by a or the first reactive-power droop in such a way that it sets an electrical voltage to be provided by the voltage-impressing unit (808) in the energy generating grid in dependence on a reactive power (Q) fed in by the voltage-impressing unit (808) in such a way that the reactive power (Q) fed in is controlled to a value of almost zero, in particular with a small steady system deviation.

12. A wind farm for exchanging electrical power with an electrical supply grid, by way of a grid connection point, comprising
- a number of wind power installations, wherein each of the wind power installations has one or more feeding-in devices (808, 810),
- one or more of the feeding-in devices (808, 810), which are configured in such a way that these operate as voltage-impressing units (808) and exchange power with the electrical supply grid in a voltage-impressing manner and
**characterized in that**, that
- one or more of the feeding-in devices (808, 810), which are configured in such a way that these operate as current-impressing units (810) and exchange power with the electrical supply grid in a current-impressing manner wherein
- the voltage-impressing units (808) and the current-impressing units (810) also operate in a voltage-impressing and current-impressing manner during undisturbed operation of the electrical supply grid.

13. The wind farm as claimed in claim 12, **characterized in that**
- each feeding-in device (808, 810) is **characterized by** a power coefficient, in particular a rated power, and **in that**, with reference to the respective power coefficients,
- the wind farm has a greater proportion of current-impressing units (810) than voltage-impressing units (808), wherein preferably,
- with reference to a sum of the power coefficients of all of the feeding-in devices as a 100% proportion, the voltage-impressing units (808) have a proportion of at least 2% and at most 25%, preferably have a proportion of at most 15% and in particular a proportion of at most 10%.

14. The wind farm as claimed in claim 12 or 13, **characterized in that**
- each wind farm (100) or each feeding-in device (808, 810) has at least one control device and at least one droop is respectively stored in the control device, wherein
- the voltage-impressing units (808) have at least one first droop and
- the current-impressing units (810) have at least one second droop, wherein
- each droop respectively describes a relationship, particularly a linear relationship,
- between an electrical voltage of the wind farm and a reactive power (Q) that is to be fed in or has been fed in, or
- between a frequency of the wind farm and a real power that is to be fed in or has been fed in, and wherein
- the first droop has a smaller gradient than the second droop.

15. The wind farm as claimed in one of claims 12 to 14, **characterized in that**
- in at least one of the wind power installations, in particular in all of the wind power installations, there is respectively provided at least one voltage-impressing unit (808) and one current-impressing unit (810).

16. The wind farm as claimed in one of claims 12 to 15, **characterized in that**
- the wind farm is prepared for the purpose of performing a method as claimed in one of claims 1 to 11, in particular **in that**
- the wind farm has a central control unit, in order to coordinate the wind power installations and in particular the method for operating the wind farm.

17. A wind power installation for exchanging electrical power with an electrical supply grid, by way of a grid connection point, comprising
- a number of feed-in devices, wherein
- one or more of the feed-in devices, which are configured in such a way, that these operate as voltage-impressing units (808) and
**characterized in that**, that
- one or more of the feed-in devices, which are configured in such a way, that these operate as current-impressing units (810), wherein
- the voltage-impressing units (808) and the current-impressing units (810) also operate in a voltage-impressing and current-impressing manner during undisturbed operation of the electrical supply grid.

18. The wind power installation as claimed in claim 17, **characterized in that**
- each feeding-in device is **characterized by** a power coefficient, in particular a rated power, and **in that**, with reference to the respective power coefficients,
- the wind power installation has a greater proportion of current-impressing units (810) than voltage-impressing units (808), wherein preferably,
- with reference to a sum of the power coefficients of all of the feeding-in devices as a 100% proportion, the voltage-impressing units (808) have a proportion of at least 2% and at most 25%, preferably have a proportion of at most 15% and in particular a proportion of at most 10%.

19. The wind power installation as claimed in claim 17 or 18, **characterized in that**
- each feeding-in device has at least one control device and at least one droop is respectively stored in the control device, wherein
- the voltage-impressing units (808) have at least one first droop and
- the current-impressing units (810) have at least one second droop, wherein
- each droop respectively describes a relationship, particularly a linear relationship,
- between an electrical voltage of the wind power installation and a reactive power (Q) that is to be fed in or has been fed in, or
- between a frequency of the wind power installation and a real power that is to be fed in or has been fed in, and wherein
- the first droop has a smaller gradient than the second droop.

20. The wind power installation as claimed in one of claims 17 to 19,
**characterized in that**
- the wind power installation is prepared for the purpose of performing a method as claimed in one of claims 1 to 11.

## Revendications

1. Procédé de fonctionnement d'une éolienne (100) pour échanger de la puissance électrique avec un réseau d'alimentation électrique par l'intermédiaire d'un point de raccordement au réseau, dans lequel l'éolienne (100) présente plusieurs dispositifs d'injection (808, 810), ou d'un parc éolien (112) avec plusieurs éoliennes (100) pour échanger de la puissance électrique entre le parc éolien et un réseau d'alimentation électrique, dans lequel chacune des éoliennes (100) du parc éolien présente un ou plusieurs dispositifs d'injection (808, 810), et dans lequel
- l'éolienne ou le parc éolien est reliée ou relié au réseau d'alimentation électrique par l'intermédiaire d'un point de raccordement au réseau et la puissance est échangée par l'intermédiaire du point de raccordement au réseau, dans lequel
- un ou plusieurs des dispositifs d'injection (808, 810) fonctionnent comme des unités de formation de tension (808) et
**caractérisé en ce que**
- un ou plusieurs des dispositifs d'injection (808, 810) fonctionnent en tant qu'unités de formation de courant (810), dans lequel il est prévu en particulier que
- les unités de formation de tension (808) et les unités de formation de courant (810) fonctionnent également avec formation de tension ou de courant dans un fonctionnement non perturbé du réseau d'alimentation électrique.

2. Procédé selon la revendication 1,
**caractérisé en ce que**
pour faire fonctionner le parc éolien, simulténément,
- des unités de formation de tension (808) échangent avec formation de tension une puissance avec le réseau d'alimentation électrique et
- des unités de formation de courant (810) échangent avec formation de courant une puissance avec le réseau d'alimentation électrique, dans lequel
- dans le mode de formation de courant, les unités de formation de courant (810) commandent respectivement un courant d'injection à injecter dans le réseau d'alimentation électrique et
- dans le mode de formation de tension, les unités de formation de tension (808) commandent une tension d'injection pour l'injection dans le réseau d'alimentation électrique, dans lequel il est prévu en particulier que
- dans le mode de formation de courant, les unités de formation de courant (810) s'adaptent à la tension d'injection, qui est appliquée en particulier sur le point de raccordement au réseau dans le parc éolien, et/ou
- dans le mode de formation de tension, les unités de formation de tension (808) injectent respectivement un courant qui est nécessaire à la commande de la tension d'injection et/ou qui résulte de la commande de la tension d'injection.

3. Procédé selon la revendication 1 ou 2,
**caractérisé en ce que**
en cas de surfréquence dans le réseau d'alimentation électrique
- la puissance injectée par le parc éolien dans le réseau électrique est réduite, dans lequel
- les unités de formation de tension (808) diminuent d'abord leur puissance d'injection dans une période initiale pour entraîner ainsi la diminution de la puissance injectée,
- les unités de formation de courant (810) diminuent leur puissance d'injection en suivant leurs unités de formation de tension (808) pour entraîner, dans une période de raccordement suivant la période initiale, la diminution de la puissance injectée lorsque la diminution de la puissance d'alimentation par le parc éolien a pris une valeur stationnaire, dans lequel alors
- les unités de formation de tension (808) fonctionnent pour réaliser un maintien de tension et en particulier pour laisser, pendant la période de raccordement, les unités de formation de courant (810) diminuer la puissance injectée par le parc éolien.

4. Procédé selon la revendication 3,
**caractérisé en ce que**
en cas de surfréquence dans le réseau d'alimentation électrique
- la puissance du parc éolien est prélevée du réseau d'alimentation électrique et est en particulier consommée, dans lequel
- les unités de formation de tension (808) fonctionnent pour prélever la puissance du réseau d'alimentation électrique, au moins pendant la période initiale.

5. Procédé selon l'une quelconque des revendications précédentes,
**caractérisé en ce que**
les unités de formation de courant (810) fonctionnent de manière à modifier leur courant d'injection en fonction de la fréquence de réseau seulement lorsque la fréquence de réseau s'écarte de la fréquence nominale de réseau d'au moins une valeur minimale prédéfinie.

6. Procédé selon l'une quelconque des revendications précédentes,
**caractérisé en ce que**
- le parc éolien injecte une tension d'injection dans le réseau d'alimentation électrique,
- des sauts de phase dans le réseau d'alimentation électrique sont vérifiés, dans lesquels la tension de réseau présente un saut de phase qui donne lieu à un décalage de phase dans la tension de réseau,
- dans le cas d'un saut de phase, les unités de formation de tension (808) injectent d'abord une puissance active et/ou réactive dans une première étape pour maintenir la fréquence et/ou la position de phase de la tension d'injection, et
- lors de l'identification d'un saut de phase de la tension de réseau, une fréquence de référence et/ou une tension de référence de la tension de réseau modifiée est suivie dans une deuxième étape et
- les unités de formation de tension (808) suivent la tension d'injection selon la fréquence de référence ou la tension de référence.

7. Procédé selon l'une quelconque des revendications précédentes,
**caractérisé en ce que**
- le parc éolien réalise un fonctionnement de formation de tension avec une injection de puissance par une commande combinée des unités de formation de tension (808) et des unités de formation de courant (810), dans lequel
- les unités de formation de tension (808) réalisent sensiblement la formation de tension et/ou des opérations d'équilibrage dynamique, et
- les unités de formation de courant (810) réalisent sensiblement une injection de puissance stationnaire.

8. Procédé selon l'une quelconque des revendications précédentes,
**caractérisé en ce que**
- chaque dispositif d'injection (808, 810) est **caractérisé par** une valeur caractéristique de puissance, en particulier une puissance nominale, et que, par rapport aux valeurs caractéristiques de puissance respectives,
- le parc éolien présente une proportion plus importante d'unités de formation de courant (810) que d'unités de formation de tension (808), dans lequel de préférence
- par rapport à une somme des valeurs caractéristiques de puissance de tous les dispositifs d'injection (808, 810), les unités de formation de tension (808) présentent, en tant que part à 100 %, une part d'au moins 2 % et de 25 % au maximum, de préférence une part de 15 % au maximum et en particulier une part de 10 % au maximum.

9. Procédé selon l'une quelconque des revendications précédentes,
**caractérisé en ce que**
- les unités de formation de tension (808) présentent au moins une première statique et
- les unités de formation de courant (810) présentent au moins une deuxième statique, dans lequel
- chaque statique décrit respectivement une relation, en particulier linéaire,
- entre une tension électrique du parc éolien et une puissance réactive (Q) à injecter ou injectée, ou
- entre une fréquence du parc éolien et une puissance active à injecter ou injectée, et dans lequel
- la première statique présente une pente inférieure à la deuxième statique.

10. Procédé selon l'une quelconque des revendications précédentes,
**caractérisé en ce que**
- les unités de formation de tension (808) présentent chacune au moins une première statique de puissance réactive qui décrit respectivement une relation entre une tension électrique à fournir par l'unité de formation de tension (808) dans le parc éolien et une puissance réactive (Q) injectée par l'unité de formation de tension (808), et
- les unités de formation de courant (810) présentent chacune au moins une deuxième statique de puissance réactive qui décrit respectivement une relation entre une tension électrique détectée dans le parc éolien et une puissance réactive (Q) à injecter par l'unité de formation de courant (810) et
- la première statique de puissance réactive présente une pente inférieure à la deuxième statique de puissance réactive, et/ou que
- les unités de formation de tension (808) présentent chacune au moins une première statique de puissance active qui décrit respectivement une relation entre une fréquence à fournir dans le parc éolien par l'unité de formation de tension (808) et une puissance active injectée par l'unité de formation de tension (808) et,
- les unités de formation de courant (810) présentent chacune au moins une deuxième statique de puissance active qui décrit respectivement une relation entre une fréquence détectée dans le parc éolien et une puissance active à injecter par l'unité de formation de courant (810) et
- la première statique de puissance active présente une pente inférieure à celle de la deuxième statique de puissance active.

11. Procédé selon l'une quelconque des revendications précédentes,
**caractérisé en ce que**
- les unités de formation de courant (810) sont commandées par une ou la première statique de puissance réactive de manière à régler une tension électrique à fournir par l'unité de formation de tension (808) dans le réseau de production d'énergie en fonction d'une puissance réactive (Q) injectée par l'unité de formation de tension (808) de telle sorte que la puissance réactive (Q) injectée est régulée à une valeur proche de zéro, en particulier avec un faible écart de régulation stationnaire.

12. Parc éolien destiné à échanger une puissance électrique avec un réseau d'alimentation électrique, par l'intermédiaire d'un point de raccordement au réseau, comprenant
- plusieurs éoliennes, dans lequel chacune des éoliennes présente un ou plusieurs dispositifs d'injection (808, 810),
- un ou plusieurs des dispositifs d'injection (808, 810) qui sont réalisés de manière à fonctionner en tant qu'unités de formation de tension (808) et échangent avec formation de tension une puissance avec le réseau d'alimentation électrique et
**caractérisé en ce que**
- un ou plusieurs des dispositifs d'injection (808, 810) sont réalisés de manière à fonctionner en tant qu'unités de formation de courant (810) et à échanger avec formation de courant une puissance avec le réseau d'alimentation électrique, dans lequel
- les unités de formation de tension (808) et les unités de formation de courant (810) fonctionnent également avec formation de tension ou de courant dans un fonctionnement non perturbé du réseau d'alimentation électrique.

13. Parc éolien selon la revendication 12, **caractérisé en ce que**
- chaque dispositif d'injection (808, 810) est **caractérisé par** une valeur caractéristique de puissance, en particulier une puissance nominale, et que, par rapport aux valeurs caractéristiques de puissance respectives,
- le parc éolien présente une proportion plus importante d'unités de formation de courant (810) que d'unités de formation de tension (808), dans lequel de préférence
- par rapport à une somme des valeurs caractéristiques de puissance de tous les dispositifs d'injection en tant que part de 100 %, les unités de formation de tension (808) présentent une part d'au moins 2 % et de maximum 25 %, de préférence une part de maximum 15 % et en particulier une part de maximum 10 %.

14. Parc éolien selon la revendication 12 ou 13, **caractérisé en ce que**
- chaque éolienne (100) ou chaque dispositif d'injection (808, 810) présente au moins un dispositif de commande et au moins une statique est respectivement enregistrée dans le dispositif de commande, dans lequel
- les unités de formation de tension (808) présentent au moins une première statique et
- les unités de formation de courant (810) présentent au moins une deuxième statique, dans lequel
- chaque statique décrit respectivement une relation, en particulier linéaire,
- entre une tension électrique du parc éolien et une puissance réactive (Q) à injecter ou injectée, ou
- entre une fréquence du parc éolien et une puissance active à injecter ou injectée, et dans lequel
- la première statique présente une pente inférieure à la deuxième statique.

15. Parc éolien selon l'une quelconque des revendications 12 à 14, **caractérisé en ce que**
- dans au moins une des éoliennes, en particulier dans toutes les éoliennes, au moins une unité de formation de tension et une unité de formation de courant (808, 810) sont respectivement prévues.

16. Parc éolien selon l'une quelconque des revendications 12 à 15, **caractérisé en ce que**
- le parc éolien est préparé pour exécuter un procédé selon l'une quelconque des revendications 1 à 11, en particulier que
- le parc éolien présente une unité de commande centrale pour coordonner les éoliennes et en particulier le procédé de fonctionnement du parc éolien.

17. Éolienne destinée à échanger une puissance électrique avec un réseau d'alimentation électrique par l'intermédiaire d'un point de raccordement au réseau, comprenant
- plusieurs dispositifs d'injection, dans laquelle
- un ou plusieurs des dispositifs d'injection sont réalisés de manière à fonctionner en tant qu'unités de formation de tension (808) et
**caractérisée en ce que**
- un ou plusieurs des dispositifs d'injection sont réalisés de manière à fonctionner en tant qu'unités de formation de courant (810), dans laquelle
- les unités de formation de tension (808) et les unités de formation de courant (810) fonctionnent également avec formation de tension ou de courant dans un fonctionnement non perturbé du réseau d'alimentation électrique.

18. Éolienne selon la revendication 17, **caractérisée en ce que**
- chaque dispositif d'injection est **caractérisé par** une valeur caractéristique de puissance, en particulier une puissance nominale, et que, par rapport aux valeurs caractéristiques de puissance respectives,
- l'éolienne présente une proportion plus importante d'unités de formation de courant (810) que d'unités de formation de tension (808), dans laquelle de préférence
- par rapport à une somme des valeurs caractéristiques de puissance de tous les dispositifs d'injection en tant que part de 100 %, les unités de formation de tension (808) présentent une part d'au moins 2 % et de maximum 25 %, de préférence une part de maximum 15 % et en particulier une part de maximum 10 %.

19. Éolienne selon la revendication 17 ou 18, **caractérisée en ce que**
- chaque dispositif d'injection présente au moins un dispositif de commande et au moins une statique est respectivement enregistrée dans le dispositif de commande, dans laquelle
- les unités de formation de tension (808) présentent au moins une première statique et
- les unités de formation de courant (810) présentent au moins une deuxième statique, dans laquelle
- chaque statique décrit respectivement une relation, en particulier linéaire,
- entre une tension électrique de l'éolienne et une puissance réactive (Q) à injecter ou injectée, ou
- entre une fréquence de l'éolienne et une puissance active à injecter ou injectée, et dans laquelle
- la première statique présente une pente inférieure à la deuxième statique.

20. Éolienne selon l'une quelconque des revendications 17 ou 19,
**caractérisée en ce que**
- l'éolienne est préparée pour exécuter un procédé selon l'une quelconque des revendications 1 à 11.
